# EUROPÄISCHE PATENTANMELDUNG

(11) **EP 2 709 053 A1**
(43) Veröffentlichungstag der Anmeldung: **19.03.2014**
(21) Anmeldenummer: 13183939.1
(22) Anmeldetag: 11.09.2013
(51) Int. Cl.: G06Q 30/02

(54) **Erfassung der Wahrnehmung einer Werbung durch einen Nutzer und deren Wirkung**

(30) Priorität: 12.09.2012 DE 102012108528; 21.12.2012 DE 102012112873
(71) Anmelder: Deutsche Post AG, 53113 Bonn (DE)
(72) Erfinder: Schirl, Felix, 80798 München (DE)
(74) Vertreter: Cohausz & Florack

(57) **Zusammenfassung**

Offenbart wird ein Verfahren, das durch eine oder mehrere Vorrichtungen ausgeführt wird. Ein Zugriff eines Nutzers auf eine Informationsseite aus einer Menge von ein oder mehreren Informationsseiten eines Werbetreibenden wird erfasst. Es wird entscheiden, ob der Nutzer eine ihm mittels eines Informationskanals präsentierte Werbung des Werbetreibenden wahrgenommen hat und daraufhin auf die Informationsseite zugreift. Das Entscheiden hängt zumindest von einer Zeitdifferenz zwischen einem mit der Präsentation der Werbung assoziierten Zeitpunkt und einem mit dem Zugriff des Nutzers auf die Informationsseite assoziierten Zeitpunkt ab und/oder basiert zumindest auf der Zeitdifferenz. Information, die das Ergebnis des Entscheidens repräsentiert, wird verarbeitet, gespeichert oder deren Speicherung veranlasst. Das Entscheiden basiert zumindest auf (i) Information über einen oder mehrere, die Präsentation der Werbung mittels des Informationskanals nicht umfassende Berührungspunkte des Nutzers mit jeweiliger mit dem Werbetreibenden assoziierter Information oder mit einer jeweiligen Informationsseite der Menge von Informationsseiten des Werbetreibenden, und/oder (ii) ein mit der Präsentation der Werbung verbundener geschätzter Anstieg der Anzahl von Zugriffen auf die Informationsseiten des Werbetreibenden in dem Zugriffskanal, über den der Zugriff des Nutzers auf die Infarmationsseite erfolgt, in einem Zeitintervall während und/oder nach der Präsentation der Werbung im Vergleich zu einem Zeitintervall vor der Präsentation der Werbung, und/oder (iii) Information, ob es sich bei einem Gerät, mit dem der Nutzer auf die Informationsseite zugreift, um ein mobiles Gerät handelt. Offenbart werden ferner ein entsprechendes Computerprogramm, entsprechende Vorrichtungen und ein entsprechendes System.

## Beschreibung

### Gebiet

Beispielhafte Ausführungsformen der Erfindung betreffen die Erfassung der Wahrnehmung einer Werbung, beispielsweise von Fernseh- oder Rundfunkwerbung, durch einen Nutzer und deren Wirkung.

### Hintergrund

In jüngerer Zeit hat die Platzierung von Werbung im Internet zunehmend an Bedeutung gewonnen. Werbung kann im Internet mittels einer Vielzahl von Online-Werbekanälen ausgesteuert werden, beispielsweise in Form von Banner-Werbeanzeigen, als gekaufte Suchergebnisse in Internet-Suchmaschinen, in Produktsuchmaschinen oder in sozialen Netzwerken, um nur einige Beispiele zu nennen. Zur Einschätzung der Effektivität der Werbung als Grundlage für eine Kosten/NutzenAbwägung existieren für die Online-Werbekanäle sowohl Verfahren zur Messung der Wahrnehmung der Werbung durch den Nutzer als auch zur Messung der Wirkung der Werbung auf den Nutzer. Die Wahrnehmung der Werbung - gemeinhin als "Impression" bezeichnet - wird beispielsweise bereits angenommen, wenn die Werbung dem Nutzer am Bildschirm seines Computers angezeigt wird, und ist damit verhältnismäßig einfach durch die aussteuernde Einheit erfassbar. Entsprechend lässt sich einer Werbung also eine Anzahl von Impressions zuordnen. Die Wirkung der Werbung kann beispielsweise daran gemessen werden, ob der Nutzer die Werbung anklickt, um mehr über das beworbene Produkt zu erfahren. Diese Aktion wird gemeinhin als "Klick" bezeichnet und kann beispielsweise durch ein sog. Redirect-Verfahren erfasst werden. Das Anklicken der Werbung führt hier nicht unmittelbar zur Ziel-Webseite mit den gewünschten Informationen, sondern führt über einen Tracking-Server, der das Anklicken der Werbung erfasst und den Browser des Nutzers erst anschließend zur eigentlichen Ziel-Webseite weiterleitet. Setzt man die Anzahl von Klicks einer Werbung ins Verhältnis zur Anzahl der Impressions der Werbung, erhält man die sog. Click-Through-Rate (CTR), die als Maß für die Wirkung der Werbung dienen kann.

Im Gegensatz zur Situation bei den Online-Werbekanälen ist eine Messung der Wahrnehmung und Wirkung von Werbung, die über andere Informationskanäle, beispielsweise über Fernsehen oder Rundfunk, ausgestrahlt wird, nicht möglich. Hier werden beispielsweise Befragungen von Nutzern (beispielsweise telefonische Befragungen oder schriftliche Befragungen mit Befragungsbögen) vorgenommen, um festzustellen, ob Nutzer eine Werbung wahrgenommen haben und wie deren Wirkung auf die Nutzer war.

Einen alternativen Ansatz schlägt die internationale Patentanmeldung WO 2011/063116 A2 vor.

Hier wird u.a. die Effektivität von Werbung in Offline-Werbekanälen wie beispielsweise Fernsehen oder Rundfunk anhand einer ab der Präsentation der Werbung erfolgten Zunahme der mit der Werbung assoziierter Kommunikation (Suchen in Suchmaschinen, Zugriffe auf Webseiten, Telefonate) ermittelt.

### Zusammenfassung einiger beispielhafter Ausführungsformen der Erfindung

Das oben beschriebene Verfahren der WO 2011/063116 A2 nutzt u.a. die zeitliche Nähe zwischen der Präsentation der Werbung und mit der Werbung assoziierter Kommunikation, Information über den Ort, an dem die Kommunikation erfolgt und Information über Suchbegriffe, die in der Kommunikation verwendet werden als Kriterien für eine Entscheidung, ob die Kommunikation mit der Werbung assoziiert ist oder nicht. Zudem erfolgt die Auswertung nicht unmittelbar beim Auftreten der Kommunikation (beispielsweise beim Zugriff auf eine Website), sondern zu einem späteren Zeitpunkt, so dass beispielsweise ein Nutzer, der aufgrund der Werbung auf eine mit der Werbung assoziierte Webseite zugreift, nicht sofort mit speziell an seine Bedürfnisse angepassten Informationen versorgt werden kann.

Ausgehend von diesem Stand der Technik ist es unter anderem eine Aufgabe der Erfindung, eine genauere Erfassung der Wahrnehmung und Wirkung von Werbung, die einem Nutzer mittels eines Informationskanals präsentiert wird, zu ermöglichen.

Gemäß einem ersten Aspekt der Erfindung wird ein Verfahren offenbart, das durch eine oder mehrere Vorrichtungen ausgeführt wird und folgendes umfasst:
- Erfassen eines Zugriffs eines Nutzers auf eine Informationsseite aus einer Menge von ein oder mehreren Informationsseiten eines Werbetreibenden;
- Entscheiden, ob der Nutzer eine ihm mittels eines Informationskanals präsentierte Werbung des Werbetreibenden wahrgenommen hat und daraufhin auf die Informationsseite zugreift, wobei das Entscheiden zumindest von einer Zeitdifferenz zwischen einem mit der Präsentation der Werbung assoziierten Zeitpunkt und einem mit dem Zugriff des Nutzers auf die Informationsseite assoziierten Zeitpunkt abhängt und/oder zumindest auf der Zeitdifferenz basiert und
- zumindest eines von Verarbeiten, Speichern und Veranlassen der Speicherung von Information, die das Ergebnis des Entscheidens repräsentiert,
wobei das Entscheiden zumindest auf einem der folgenden basiert:
- Information über einen oder mehrere, die Präsentation der Werbung mittels des Informationskanals nicht umfassende Berührungspunkte des Nutzers mit jeweiliger mit dem Werbetreibenden assoziierter Information oder mit einer jeweiligen Informationsseite der Menge von Informationsseiten des Werbetreibenden,
- ein mit der Präsentation der Werbung verbundener geschätzter Anstieg der Anzahl von Zugriffen auf die Informationsseiten des Werbetreibenden in dem Zugriffskanal, über den der Zugriff des Nutzers auf die Informationsseite erfolgt, in einem Zeitintervall während und/oder nach der Präsentation der Werbung im Vergleich zu einem Zeitintervall vor der Präsentation der Werbung, und
- Information, ob es sich bei einem Gerät, mit dem der Nutzer auf die Informationsseite zugreift, um ein mobiles Gerät handelt.

Gemäß einem zweiten Aspekt der Erfindung wird ein Computerprogramm offenbart, das Programmanweisungen umfasst, die einen Prozessor zur Ausführung und/oder Steuerung des Verfahrens gemäß dem ersten Aspekt der Erfindung veranlassen, wenn das Computerprogramm auf dem Prozessor läuft. Unter einem Prozessor sollen in dieser Spezifikation unter anderem Kontrolleinheiten, Mikroprozessoren, Mikrokontrolleinheiten wie Mikrocontroller, digitale Signalprozessoren (DSP), Anwendungsspezifische Integrierte Schaltungen (ASICs) oder Field Programmable Gate Arrays (FPGAs) verstanden werden. Dabei können entweder alle Schritte des Verfahrens gesteuert werden, oder alle Schritte des Verfahrens ausgeführt werden, oder ein oder mehrere Schritte gesteuert und ein oder mehrere Schritte ausgeführt werden. Das Computerprogramm kann beispielsweise über ein Netzwerk wie das Internet, ein Telefon- oder Mobilfunknetz und/oder ein lokales Netzwerk verteilbar sein. Das Computerprogramm kann zumindest teilweise Software und/oder Firmware eines Prozessors sein. Es kann gleichermaßen zumindest teilweise als Hardware implementiert sein. Das Computerprogramm kann beispielsweise auf einem computerlesbaren Speichermedium gespeichert sein, z.B. einem magnetischen, elektrischen, elektro-magnetischen, optischen und/oder andersartigen Speichermedium. Das Speichermedium kann beispielsweise Teil des Prozessors sein, beispielsweise ein (nicht-flüchtiger oder flüchtiger) Programmspeicher des Prozessors oder ein Teil davon.

Gemäß einem dritten Aspekt der Erfindung wird eine Vorrichtung offenbart, die zur Ausführung und/oder Steuerung des Verfahrens gemäß dem ersten Aspekt der Erfindung eingerichtet ist oder jeweilige Mittel zur Ausführung und/oder Steuerung der Schritte des Verfahrens gemäß dem ersten Aspekt der Erfindung umfasst. Dabei können entweder alle Schritte des Verfahrens gesteuert werden, oder alle Schritte des Verfahrens ausgeführt werden, oder ein oder mehrere Schritte gesteuert und ein oder mehrere Schritte ausgeführt werden. Die Vorrichtung kann beispielsweise Mittel zum Erfassen, Mittel zum Entscheiden und Mittel zum zumindest einen von Verarbeiten, Speichern und Veranlassen der Speicherung umfassen. Ein oder mehrere diese Mittel können auch durch die gleiche Einheit ausgeführt und/oder gesteuert werden. Beispielsweise können ein oder mehrere der Mittel durch einen oder mehrere Prozessoren gebildet sein. Bei der Vorrichtung kann es sich beispielsweise um einen Server handeln, beispielsweise um einen Tracking-Server.

Gemäß einem vierten Aspekt der Erfindung wird eine Vorrichtung offenbart, die zumindest einen Prozessor und zumindest einen Speicher, der Programmcode beinhaltet, umfasst, wobei der Speicher und der Programmcode eingerichtet sind, die Vorrichtung mit dem zumindest einen Prozessor dazu zu veranlassen, zumindest das Verfahren gemäß dem ersten Aspekt der Erfindung auszuführen und/oder zu steuern. Dabei können entweder alle Schritte des Verfahrens gesteuert werden, oder alle Schritte des Verfahrens ausgeführt werden, oder ein oder mehrere Schritte gesteuert und ein oder mehrere Schritte ausgeführt werden.

Gemäß einem fünften Aspekt der Erfindung wir ein System offenbart, das eine oder mehrere Vorrichtungen umfasst, wobei das System zur Ausführung des Verfahrens gemäß dem ersten Aspekt der Erfindung eingerichtet ist oder jeweilige Mittel zur Ausführung der Schritte des Verfahrens gemäß dem ersten Aspekt der Erfindung umfasst. Das System kann beispielsweise eine erste Vorrichtung mit Mitteln zur Ausführung eines Teils des Verfahrens gemäß dem ersten Aspekt der Erfindung und eine zweite Vorrichtung mit Mitteln zur Ausführung des restlichen Teils des Verfahrens gemäß dem ersten Aspekt der Erfindung umfassen. Das System kann jedoch auch mehr als zwei Vorrichtungen erfassen, die gemeinsam das Verfahren gemäß dem ersten Aspekt der Erfindung ausführen.

Im Folgenden werden beispielhafte Eigenschaften und Ausführungsformen der Erfindung beschrieben, welche gleichermaßen für das Verfahren gemäß dem ersten Aspekt, das Computerprogramm gemäß dem zweiten Aspekt, den Vorrichtungen gemäß dem dritten und vierten Aspekt und dem System gemäß dem fünften Aspekt gültig sind.

Zunächst wird der Zugriff eines Nutzers auf eine Informationsseite erfasst. Die Informationsseite ist Teil einer Menge von ein oder mehreren Informationsseiten, die beispielsweise miteinander assoziiert sind. Die Menge von Informationsseiten ist einem Werbetreibenden zugeordnet, also beispielsweise einem Unternehmen oder einer Person. Der Werbetreibende wirbt zumindest mittels der im Informationskanal präsentierten Werbung, beispielsweise für Produkte und/oder Dienstleistungen des Werbetreibenden. Zusätzlich können auch die Informationsseiten des Werbetreibende Werbung enthalten. Bei dem Nutzer kann es sich beispielsweise um eine Person handel, die mittels einer Vorrichtung auf die Informationsseite zugreift. Der Zugriff erfolgt beispielsweise über ein öffentliches paketvermitteltes Datennetz, bei dem es sich beispielsweise um das Internet handeln kann. In diesem Fall ist die Informationsseite dann entsprechend eine Internetseite oder Webseite, die von einem Internetserver zur Verfügung gestellt wird. Die Menge von ein oder mehreren Internetseiten ist dann beispielsweise eine Website, also ein Webauftritt, des Werbetreibenden. Die Internetseiten der Menge von Internetseiten weisen dann beispielsweise alle zumindest die gleiche Top-Level-Domain und Second-Level Domain auf. Eine der Internetseiten kann dann beispielsweise die Homepage oder Startseite der Website darstellen. Die Vorrichtung zum Zugriff auf die Internetseite ist dann eine Browservorrichtung, wie beispielsweise der Microsoft Internet Explorer oder Mozilla Firefox, die auf einem elektronischen Gerät (beispielsweise einem Computer oder einem Mobiltelefon) des Nutzers installiert ist. Sowohl der Internetserver als auch das elektronische Gerät haben dann unmittelbar oder mittelbar Zugang zum Internet.

Die Erfassung des Zugriffs auf die Informationsseite kann ebenfalls über ein öffentliches paketvermitteltes Datennetz (beispielsweise das Internet) erfolgen, beispielsweise über das gleiche Datennetz, über das der Zugriff auf die Informationsseite erfolgt.

Es wird entschieden, ob der Nutzer (beispielsweise vor dem Zugriff auf die Informationsseite) eine ihm mittels eines Informationskanals präsentierte Werbung des Werbetreibenden wahrgenommen hat und daraufhin auf die Informationsseite zugreift. Dies kann beispielsweise in Reaktion auf den Zugriff des Nutzers auf die Informationsseite erfolgen, beispielsweise innerhalb eines Zeitraums von weniger als 10, 20, 50, 100, 200 oder 500 ms nach der Erfassung des Zugriffs des Nutzers auf die Informationsseite. Das Entscheiden kann beispielsweise durch die gleiche Funktionseinheit vorgenommen werden, die auch den Zugriff des Nutzers auf die Informationsseite erfasst hat. Bei dem Informationskanal kann es sich beispielsweise um einen Informationskanal handeln, in dem Informationen einer Vielzahl von Nutzern gleichermaßen gemäß einem vorgegebenen Zeitplan präsentiert werden (beispielsweise im Broadcast-Modus (Rundsendemodus)). Ein mit der Präsentation der Werbung assoziierter Zeitpunkt kann beispielsweise nicht durch den Nutzer verändert oder beeinflusst werden und/oder ist unabhängig von Handlungen des Nutzers (wobei der mit der Präsentation der Werbung assoziierte Zeitpunkt beispielsweise ein Zeitpunkt ist, zu dem oder ab dem die Präsentation der Werbung erfolgt oder geplant ist). Der Informationskanal verfügt beispielsweise über keinen Rückkanal oder sonstige Mittel, über den eine Wahrnehmung der Werbung durch den Nutzer und die Wirkung der Werbung auf den Nutzer unmittelbar erfasst werden könnten (beispielsweise im Gegensatz zum Internet als Informationskanal mit unmittelbarem Rückkanal für Tracking von Impressions und/oder Klicks). Beispiele für den Informationskanal sind digitales oder analoges Fernsehen oder digitaler oder analoger Hörfunk (Radio). Nicht abschließende Beispiele für digitales Fernsehen sind beispielsweise die auf den Digital Video Broadcasting (DVB) Standards beruhenden Verfahren (z.B. DVB-T, DVB-T2, DVB-S, DVB-S2, DVB-C, DVB-C2, DVB-H, DVB-IPI), Digital Multimedia Broadcasting (DMB) oder Internet Protocol Television (IPTV).

Nicht abschließende Beispiele für digitalen Hörfunk sind Digital Audio Broadcasting (DAB) und Digital Radio Mondial (DRM). Weitere Beispiele für den Informationskanal sind Kino, Präsentation - insbesondere an öffentlich zugänglichen Plätzen (wie z.B. an Flughäfen oder Bahnhöfen) - durch Anzeigetafeln und/oder Lautsprecher, oder auch Printmedien (z.B. Publikation in Tageszeitungen oder Zeitschriften). Der Informationskanal kann beispielsweise nicht auf einem öffentlichen paketvermittelten Datennetz beruhen. Der Informationskanal kann beispielsweise nicht auf dem öffentlichen paketvermittelten Datennetz beruhen, über den der Zugriff des Nutzers auf die Informationsseite erfolgt. Beispielsweise beruht der Informationskanal nicht auf dem Internet, so dass die Inhalte des Informationskanals (und mithin auch die Werbung) nicht über das Internet zu dem Nutzer übertragen werden.

Bei der Werbung kann es sich beispielsweise (je nach Informationskanal) um eine Textwerbung (beispielsweise mit oder ohne Bilder), eine Audiowerbung (z.B. ein Radio-Werbespot oder eine Durchsage), eine Videowerbung oder eine kombinierte Audio/Videowerbung (beispielsweise einen TV-Spot) handeln. Die Werbung kann auch in Form von Product-Placement in Filmen oder Radio-sendungen auftreten, also Bestandteil eines Films oder einer Radiosendung sein. Die Werbung kann beispielsweise den Werbetreibenden selbst oder ein oder mehrere Produkte und/oder Dienstleistungen des Werbetreibenden betreffen.

Die Werbung kann zumindest teilweise mit einer Informationsseite der Menge von Informationsseiten assoziiert sein, beispielsweise mit einem Inhalt und/oder einer Adresse der Informationsseite. Beispielsweise betreffen sowohl die Werbung als auch die Informationsseite die gleiche Entität (beispielsweise ein Produkt wie beispielsweise eine Ware oder eine Dienstleistung, oder ein Unternehmen, beispielsweise den Werbetreibenden). Beispielsweise enthält die Werbung einen Hinweis auf die Adresse einer Informationsseite der Menge von Informationsseiten (beispielsweise eine Internetadresse der Informationsseite, beispielsweise die Homepage oder Startseite einer Website).

Information, die das Ergebnis des Entscheidens repräsentiert, wird verarbeitet und/oder gespeichert und/oder deren Speicherung wird veranlasst. Das Speichern kann beispielsweise in einem Speicher der Vorrichtung, die das Entscheiden durchführt, erfolgen, beispielsweise zusammen mit einer Kennung für den Nutzer (und gfs. weiteren den Nutzer betreffenden Daten). Zusätzlich oder alternativ kann die Speicherung der Information in einer anderen Vorrichtung veranlasst werden, beispielsweise in einer Vorrichtung, mit der der Nutzer auf die Informationsseite zugreift. Dies kann beispielsweise durch Setzen eines Cookies in einer Browservorrichtung des Nutzers erfolgen, wobei der Cookie dann die Information speichert und zu einem späteren Zeitpunkt wieder ausgelesen werden kann. Die Verarbeitung kann beispielsweise die Zusammenführung der das Ergebnis des Entscheidens repräsentierenden Information mit Information, die das Ergebnis des Entscheidens hinsichtlich eines oder mehrerer weiterer Nutzer bezüglich der gleichen Werbung repräsentiert, umfassen, um ein Maß für die Wirkung der Werbung zu erhalten, wie nachfolgend noch genauer ausgeführt wird. Alternativ oder zusätzlich kann die Verarbeitung die Modifikation oder Umleitung der Informationsseite oder der Inhalte der Informationsseite in Abhängigkeit des Ergebnisses des Entscheidens umfassen, wie ebenfalls nachfolgend noch genauer ausgeführt wird.

Das Entscheiden ist zumindest von einer Zeitdifferenz zwischen einem mit der Präsentation der Werbung assoziierten Zeitpunkt (beispielsweise ein Zeitpunkt, zu dem oder ab dem die Präsentation der Werbung startet oder zu dem die Präsentation der Werbung abgeschlossen ist) und einem mit dem Zugriff des Nutzers auf die Informationsseite assoziierten Zeitpunkt (beispielsweise ein Zeitpunkt, an dem der Zugriff des Nutzers auf die Informationsseite erfolgt oder erfasst wird) abhängig und/oder basiert zumindest darauf. Beispielsweise ist die Zeitdifferenz dafür ausschlaggebend, ob das Entscheiden überhaupt ausgeführt wird oder nicht. Beispielsweise wird das Entscheiden (beispielsweise zur Reduzierung der erforderlichen Rechenleistung) nur ausgeführt, wenn die Zeitdifferenz kleiner als ein vordefinierter Schwellwert (z.B. 5, 10, 15 ad. 20 min) ist, weil dann eine gewisse Wahrscheinlichkeit besteht, dass der Nutzer die Werbung wahrgenommen hat und daraufhin auf die Informationsseite zugreift, und sich mithin der Aufwand des Entscheidens unter Einbeziehung weiterer Kriterien lohnt. Zusätzlich oder alternativ kann auch das Entscheiden auf der Zeitdifferenz basieren, die Zeitdifferenz kann also im Prozess des Entscheidens, gfs. mit weiteren Kriterien, berücksichtigt werden. Die Erfassung des mit dem Zugriff des Nutzers auf die Informationsseite assoziierten Zeitpunkts ist beispielsweise Teil des Verfahrens gemäß dem ersten Aspekt der Erfindung und kann beispielsweise entsprechend von der oder den Vorrichtungen, die das Verfahren gemäß dem ersten Aspekt der Erfindung ausführen, ausgeführt werden, beispielsweise von der Funktionseinheit, die auch den Zugriff des Nutzers auf die Informationsseite erfasst. Der mit der Präsentation der Werbung assoziierte Zeitpunkt kann beispielsweise aus einem Sendeplan, in dem der Sendezeitpunkt der Werbung vermerkt ist, extrahiert und der Funktionseinheit, die das Entscheiden ausführt, zur Verfügung gestellt werden. Das Empfangen dieses Zeitpunkts kann beispielsweise Teil des Verfahrens gemäß dem ersten Aspekt der Erfindung sein. Alternativ kann der mit der Präsentation der Werbung assoziierte Zeitpunkt auch ohne Kenntnis des Sendeplans bestimmt werden, wodurch der administrative Aufwand der Bereitstellung und Auswertung des Sendeplans entfällt. Diese Bestimmung kann beispielsweise Teil des Verfahrens gemäß dem ersten Aspekt der Erfindung sein. Beispielsweise kann der mit der Präsentation der Werbung assoziierte Zeitpunkt automatisch bestimmt werden, beispielsweise optisch und/oder akustisch. Wenn es sich bei dem Informationskanal, mittels dem die Werbung präsentiert wird, um einen Fernsehkanal handelt, kann das Fernsehprogramm auf diesem Kanal beispielsweise automatisch nach Werbung durchsucht werden und bei erkannter Werbung dann der Zeitpunkt der Präsentation der Werbung erfasst werden. Es ist beispielsweise möglich, das von einer Vorrichtung (beispielsweise einem Fernseher) zur Präsentation des Fernsehprogramms präsentierte Fernsehprogramm optisch und/oder akustisch zu erfassen (beispielsweise durch Abfilmen) und das erfasste Fernsehprogramm dann optisch und/oder akustisch zu analysieren, um Werbung zu identifizieren. Alternativ kann das analoge oder digitale Fernsehsignal (wie es beispielsweise terrestrisch ausgestrahlt oder über Kabel oder das Internet übertragen wird) auch analysiert werden, ohne dass es präsentiert und bei der Präsentation erfasst werden muss. Die Analyse kann beispielsweise auf dem analogen oder digitalen Fernsehsignal beruhen, das beispielsweise in Bild- und/oder Tonsignale umgewandelt und dann (ohne Präsentation) analysiert wird. Eine optische Erfassung kann beispielsweise auf Texterkennung und/oder Bilderkennung beruhen. Beispielsweise kann eine Werbung anhand eines bestimmten in der Werbung enthaltenen Textes (z.B. angezeigte Firmen- und/oder Produktnamen) und/oder bestimmter in der Werbung enthaltener Bilder (beispielsweise angezeigte Firmen- und/oder Produktlogos) automatisch erkannt werden. In ähnlicher Weise kann eine akustische Erfassung von in der Werbung gesprochenen Wörtern (beispielsweise Firmen- und/oder Produktnamen) erfolgen. Anstelle eines Fernsehkanals kann natürlich auch eine Vielzahl (beispielsweise eine vorgebare Menge) von Fernsehkanälen parallel auf Werbung analysiert werden. Im Falle von Radiokanälen, die alternativ oder zusätzlich zu Fernsehkanälen auf Werbung analysiert werden können, kann in ähnlicher Weise eine akustische Analyse erfolgen. Die automatische Analyse von Fernsehund/oder Radioprogrammen nach Werbung erlaubt auch Rückschlüsse über den Ort der Präsentation der Werbung (wenn beispielsweise in einem regional beschränkten Fernseh- und/oder Radioprogramm Werbung detektiert wird, ist diese Werbung entsprechend mit dem regional beschränkten Sendegebiet assoziiert),

Beispielsweise wird dann, wenn die Zeitdifferenz kleiner als eine vordefinierte Schwelle (beispielsweise 5, 10 oder 15 min) ist, davon ausgegangen, dass eine höhere Wahrscheinlichkeit besteht, dass der Nutzer die Werbung wahrgenommen hat und daraufhin auf die Informationsseite zugreift, als wenn die Zeitdifferenz größer als die vordefinierte Schwelle ist.

Es wird also zunächst ausgenutzt, dass ein Zugriff des Nutzers in unmittelbarer zeitlicher Nähe zur Präsentation der Werbung eine hohe Wahrscheinlichkeit birgt, dass der Nutzer die Werbung wahrgenommen hat und daraufhin (oder deshalb) auf die Informationsseite zugreift, beispielsweise um auf der Informationsseite mehr Informationen über den Gegenstand der Werbung zu erhalten.

Da bei alleiniger Anwendung dieses zeitlichen Kriteriums unweigerlich auch für Nutzer, die die Werbung definitiv nicht wahrgenommen haben, aber dennoch (kurz nach der Präsentation der Werbung) auf die Informationsseite zugreifen, entschieden würde, dass sie die Werbung wahrgenommen haben und daraufhin auf die Infonnationsseite zugreifen, basiert in beispielhaften Ausfuhrungsformen der Erfindung das Entscheiden zumindest auf einem der drei nachfolgend erläuterten Kriterien, um die Qualität der Entscheidung zu verbessern und damit eine verbesserte Erfassung der Wahrnehmung und Wirkung einer Werbung zu ermöglichen. Das Entscheiden basiert also auf einem oder beiden oder drei dieser drei Kriterien und - falls das oben beschriebene zeitliche Kriterium nicht ausschließlich zur Feststellung genutzt wird, ob das Entscheiden überhaupt ausgeführt werden soll - zusätzlich auf dem zeitlichen Kriterium. Darüber hinaus können noch weitere Kriterien hinzutreten, wie später noch genauer erläutert wird.

Ein erstes Kriterium für das Entscheiden ist Information über einen oder mehrere, die Präsentation der Werbung mittels des Informationskanals nicht umfassende Berührungspunkte des Nutzers mit jeweiliger mit dem Werbetreibenden assoziierter Information oder mit einer jeweiligen Informationsseite der Menge von Informationsseiten des Werbetreibenden. Es wird also Information über einen oder mehrere Berührungspunkte des Nutzers (beispielsweise vor dem erfassten Zugriff auf die Informationsseite) mit jeweiliger (also möglicherweise, aber nicht zwingend für jeden Berührungspunkt unterschiedlicher) mit dem Werbetreibenden assoziierter Information oder mit einer jeweiligen (also möglicherweise, aber nicht zwingend für jeden Berührungspunkt unterschiedlichen) Informationsseite der Menge von Informationsseiten des Werbetreibenden, ausgewertet. Die mit dem Werbetreibenden assoziierte Information kann also für einige oder alle Berührungspunkte des Nutzers gleich oder unterschiedlich sein, und die Informationsseite der Menge von Informationsseiten kann für einige oder alle Berührungspunkte des Nutzers gleich oder unterschiedlich sein. Diese Berührungspunkte umfassen nicht die Präsentation der Werbung mittels des Informationskanals. Bei den Berührungspunkten kann es sich beispielsweise um Berührungspunkte handeln, die zumindest teilweise in einem öffentlichen paketvermittelten Datennetz, beispielsweise dem Internet, stattfinden. Die Berührungspunkte können beispielsweise auch mittels des öffentlichen paketvermittelten Datennetzes (beispielsweise dem Internet) erfasst werden. Die Berührungspunkte können insbesondere Teil einer sog. "Customer-Journey" oder "User-Journey" des Nutzers (z.B. eine zeitliche Abfolge von Handlungen des Nutzers, beispielsweise hinsichtlich der Menge von Informationsseiten und/oder hinsichtlich mit dem Werbetreibenden assoziierter Information) sein. Der zeitlich letzte Berührungspunkt kann dabei der Zugriff des Nutzers auf die Informationsseite (der im Schritt des Erfassens des Verfahrens gemäß dem ersten Aspekt der Erfindung erfasst wird) sein. Beispielsweise sinkt die Wahrscheinlichkeit, dass entschieden wird, dass ein Nutzer die Werbung wahrgenommen hat und daraufhin auf die Informationsseite zugreift, wenn der Nutzer vor dem Zugriff auf die Informationsseite (und/oder vor der Präsentation der Werbung) bereits einen Berührungspunkt mit einer Informationsseite aus der Menge der Informationsseiten (beispielsweise indem er auf einen Link auf die Informationsseite geklickt hat) oder mit Information, die mit dem Werbetreibenden assoziiert ist (beispielsweise indem er auf einer Webseite eine Werbeanzeige betreffend den Werbetreibenden angezeigt bekommen hat), hatte, sich also beispielsweise unabhängig von der Werbung über den Gegenstand der Werbung informiert hat. Die Berücksichtigung der Berührungspunkte des Nutzers bei dem Entscheiden kann es erforderlich machen, der Vorrichtung, die das Entscheiden ausführt, zumindest die Information über die ein oder mehreren Berührungspunkte des Nutzers zur Verfügung zu stellen. Die zumindest teilweise Erfassung der Information kann beispielsweise Teil des Verfahrens gemäß dem ersten Aspekt der Erfindung sein und entsprechend von der oder den Vorrichtungen, die das Verfahren gemäß dem ersten Aspekt der Erfindung ausführen, ausgeführt werden. Zumindest ein Teil der Information kann auch (beispielsweise von anderen Vorrichtungen) empfangen werden. Die Information über die Berührungspunkte des Nutzers (beispielsweise hinsichtlich der Menge von Informationsseiten des Werbetreibenden) kann beispielsweise in einem Cookie auf dem Gerät, mit dem der Nutzer auf die Informationsseite zugreift, gespeichert werden. Beispielsweise kann jeder Berührungspunkt, oder zumindest die Berührungspunkte eines Zeitintervalls vordefinierter Länge, in dem Cookie gespeichert werden, beispielsweise mit Information, die die Zeit charakterisiert, zu der der Berührungspunkt stattfand. Die in dem Cookie zu den Berührungspunkten gespeicherten Informationen können dabei von einem oder mehreren Tracking-Servern erfasst worden und jeweils der bereits in dem Cookie enthaltenen Information hinzugefügt worden sein. Dies ist beispielsweise möglich, wenn die Informationsseiten der Menge von Informationsseiten ein Script oder ein Tracking-Pixel enthalten, das beim Zugriff auf die Informationsseiten (also beispielsweise beim Zustandekommen eines Berührungspunktes des Nutzers mit einer der Informationsseiten) eine Benachrichtigung oder Anfrage an eine Internetadresse stellt, der die ein oder mehreren Tracking-Server zugeordnet sind. Die Tracking-Server reagieren auf die Benachrichtigung/Anfrage mit einer Anweisung zum Setzen eines Cookies in dem Gerät des Nutzers. Die Benachrichtigung/Anfrage enthält zudem eine Kennung des Nutzers (beispielsweise einen sog. Unique User Identifier (UUID)), die in einem weiteren Cookie auf dem Gerät des Nutzers gespeichert ist und über die die Tracking-Server den Nutzer identifizieren können.

Die in dem Cookie gespeicherte Information über die Berührungspunkte kann dann beispielsweise bei der Erfassung des Zugriffs auf die Informationsseite (beispielsweise durch einen TrackingServer) ausgelesen werden und dann für das Entscheiden (das beispielsweise ebenfalls durch den Tracking-Server ausgeführt wird) verwendet werden.

Ein zweites Kriterium für das Entscheiden ist ein mit der Präsentation der Werbung verbundener geschätzter Anstieg der Anzahl von Zugriffen auf die Informationsseiten des Werbetreibenden in dem Zugriffskanal, über den der Zugriff des Nutzers auf die Informationsseite erfolgt, in einem Zeitintervall während und/oder nach der Präsentation der Werbung im Vergleich zu einem Zeitintervall vor der Präsentation der Werbung. Bei der Präsentation der Werbung handelt es sich insbesondere nicht um die erstmalige Präsentation der Werbung. Nicht abschließende Beispiele für Zugriffskanäle sind Type-In, SEO-Klick oder SEA-Klick. Das Zeitintervall während und/oder nach der Präsentation der Werbung kann beispielsweise eine Länge von 5, 10 oder 15 min aufweisen und kann beispielsweise mit der Präsentation der Werbung beginnen. Das Zeitintervall vor der Präsentation der Werbung kann beispielsweise eine Länge von 5, 10 oder 15 min aufweisen und beispielsweise die gleiche Länge wie das Zeitintervall während und/oder nach der Präsentation der Werbung aufweisen. Die Schätzung des Anstiegs kann insbesondere auf historischen Daten beruhen, die anlässlich einer oder mehrerer früherer Präsentationen der Werbung (u.U. auch einer anderen, aber ähnlichen Werbung, beispielsweise betreffend ein Produkt des gleichen Herstellers) erfasst wurden, beispielsweise am jeweils gleichen Wochentag (oder an einem Wochentag, der beispielsweise ebenfalls ein Arbeitstag oder beispielsweise ebenfalls ein Wochenend- oder Feiertag ist) und zur jeweils gleichen Uhrzeit (oder einer ähnlichen Uhrzeit, z.B. ± 1h od. 2h). Beispielsweise kann für eine oder mehrere frühere Präsentationen der Anstieg der Besucherzahlen in dem Zugriffskanal gemessen worden sein und aus diesen ein oder mehreren gemessenen Anstiegen der Anstieg hinsichtlich der aktuellen Präsentation der Werbung geschätzt werden, beispielsweise durch Extrapolation. Alternativ kann auch der zuletzt gemessene Anstieg als Schätzwert für den Anstieg hinsichtlich der aktuellen Präsentation der Werbung verwendet werden. Beispielsweise kann ein hoher mit der Präsentation der Werbung verbundener geschätzter Anstieg der Besucherzahlen für den Zugriffskanal, über den der Nutzer auf die Informationsseite zugegriffen hat, ein starkes Anzeichen dafür sein, dass der Nutzer die Werbung wahrgenommen hat.

Ein drittes Kriterium für das Entscheiden ist Information, ob es sich bei einem Gerät, mit dem der Nutzer auf die Informationsseite zugreift, um ein mobiles Gerät handelt. Die Erfassung dieser Information kann beispielsweise Teil des Verfahrens gemäß dem ersten Aspekt der Erfindung sein und entsprechend von der oder den Vorrichtungen, die das Verfahren gemäß dem ersten Aspekt der Erfindung ausführen, ausgeführt werden. Die Gerätegattung (fest/mobil) kann beispielsweise von der Funktionseinheit, die den Zugriff des Nutzers auf die Informationsseite erfasst (beispielsweise einem Tracking-Server), erfasst werden. Die Gerätegattung oder Information, aus der sich auf die Gerätegattung schließen lässt, kann beispielsweise von Browservorrichtungen beim Zugriff auf Informationsseiten an den Webserver, der die Informationsseite hostet, übermittelt werden, beispielsweise in einem "User Agent"-Feld eines HTTP-Headers. Beispielsweise kann aus der Art des von dem Gerät verwendeten Browsers darauf geschlossen werden, ob der Browser auf einem mobilen Gerät eingesetzt wird. Untersuchungen haben gezeigt, dass ein besonders hoher Anteil der Nutzer, die tatsächlich die Werbung wahrgenommen haben und daraufhin innerhalb einer kurzen Zeitspanne auf die Informationsseite zugreifen, dies bevorzugt mit einem mobilen Gerät (bzw. der darauf installierten Browservorrichtung) vornehmen. Dies liegt zumindest teilweise darin begründet, dass mobile Geräte (wie beispielsweise Mobiltelefone, Laptops oder Tablet-Computer) üblicherweise schnell zur Hand sind und schon während der Präsentation der Werbung zum Zugriff auf die Informationsseite genutzt werden können. Es besteht also grundsätzlich bereits eine Korrelation zwischen der Gerätegattung (ortsfest/mobil) und einem kurz nach der Präsentation der Werbung stattfindenden Zugriff. Darüber hinaus bestehen auch Korrelationen zwischen der Art des Informationskanals, mittels dessen die Werbung präsentiert wird, und der Gerätegattung. Wenn der Informationskanal beispielsweise das Anzeigen oder Abspielen von Werbung an öffentlichen Plätzen (beispielsweise in Bahnhöfen, Flughäfen oder U-Bahn-Stationen) umfasst, ist unmittelbar einsichtig, dass hier ein zeitnaher Zugriff auf die Informationsseite zum Abruf assoziierte Information nur mit einem mobilen Gerät möglich ist.

Beispielhafte Ausführungsformen der Erfindung erlauben durch zusätzliche Anwendung des ersten und/oder zweiten und/oder dritten Kriteriums bei der Entscheidung eine gegenüber den aus dem Stand der Technik bekannten Verfahren eine wesentlich genauere Entscheidung, ob der Nutzer, der auf die Informationsseite zugreift, die Werbung wahrgenommen hat und daraufhin auf die Informationsseite zugreift, und erlauben damit eine genauere Erfassung der Wahrnehmung und Wirkung einer Werbung, insbesondere auch dann, wenn die Werbung mittels eines Informationskanals (wie beispielsweise Fernsehen, Hörfunk, Kino, Präsentation an öffentlichen Plätzen, etc.) präsentiert wird, der mangels technischem Rückkanal keine unmittelbare automatisierte Erfassung der Wahrnehmung und Wirkung der Werbung ermöglicht (im Gegensatz zur Präsentation von Werbung im Internet mit einer Fülle von Tracking-Möglichkeiten sowohl für Impressions als auch Klicks).

Beispielhafte Ausführungsformen der Erfindung adressieren mithin das konkrete technische Problem, eine automatische Erfassung (oder Messung) der Wahrnehmung und Wirkung einer Werbung zu ermöglichen, insbesondere, wenn eine anderweitige automatische Erfassung der Wahrnehmung und Wirkung der Werbung (beispielsweise mangels eines Rückkanals in dem Informationskanal, mittels dem die Werbung präsentiert wird) nicht möglich ist. Dieses konkrete technische Problem wird auch mit technischen Mitteln gelöst: zunächst wird (automatisch) der Zugriff des Nutzers auf die Informationsseite erfasst, dann (automatisch) entschieden, ob der Nutzer die mittels des Informationskanals präsentierte Werbung wahrgenommen hat und daraufhin auf die Informationsseite zugegriffen hat, und dann (automatisch) eine Speicherung einer das Ergebnis des Entscheidens repräsentierenden Information ausgeführt oder veranlasst oder eine Weiterverarbeitung der Information ausgeführt. Die zur Entscheidung herangezogenen Kriterien Zeitdifferenz, Berührungspunkte, geschätzter Anstieg von Besucherzahlen und/oder Gerätegattung beruhen auf weiteren Parametern, die ebenfalls größtenteils automatisch erfasst/gemessen werden, wie oben bereits dargelegt wurde. Insbesondere liegt eine Lösung eines konkreten technischen Problems mit technischen Mitteln auch deshalb vor, weil die Erfindung durch technische Gegebenheiten außerhalb der Vorrichtung(en), die die Erfindung implementiert/implementieren, insbesondere die fehlende Möglichkeit der genauen Erfassung/Messung der Wahrnehmung und Wirkung von Werbung (beispielsweise aufgrund des fehlenden Rückkanals zur anderweitigen Erfassung/Messung), bestimmt sind.

Beispielhafte Ausführungsformen der Erfindung können auch so aufgefasst werden, dass Infonnation über einen Zugriff eines Nutzers auf die Informationsseite in die das Ergebnis der Entscheidung repräsentierende Information transformiert wird, die dann beispielsweise gespeichert oder weiterverarbeitet wird.

Gemäß einer beispielhaften Ausführungsform aller Aspekte der Erfindung ist das Entscheiden ferner von einer Entfernung zwischen einer (beispielsweise erfassten oder erhaltenen) Position des Nutzers zu einem mit dem Zugriff auf die Informationsseite assoziierten Zeitpunkt und einem geographischen Bereich, in dem die Werbung präsentiert wurde, abhängig oder basiert darauf. Die Position des Nutzers kann beispielsweise durch eine Positionierungseinheit (beispielsweise eine Positionierungseinheit eines satellitengestützten (z.B. GPS) oder auf einer Karte von WLAN-Zugangspunkten basierenden Positionierungssystems) des Geräts, mit dem der Nutzer auf die Informationsseite zugreift, erfasst werden. Beispielsweise wird das Entscheiden nur ausgeführt, wenn die Entfernung einen vordefinierten Schwellwert nicht überschreitet (und beispielsweise zusätzlich auch die Zeitdifferenz einen vordefinierten Schwellwert nicht überschreitet). Zusätzlich oder alternativ kann das Entscheiden auf der Entfernung oder auf einer Information, ob die Entfernung den vordefinierten Schwellwert nicht überschreitet, basieren (gfs. mit weiteren Kriterien). Der Schwellewert kann beispielsweise so gewählt sein, dass eine Bewegung des Nutzers nach der Präsentation der Werbung noch zugelassen ist. Der Schwellwert kann beispielsweise in Abhängigkeit zu einem unten noch näher erläuterten Schwellwert (beispielsweise 5, 10, 15 oder 20 min) gewählt werden, der eine Obergrenze für die Zeitdifferenz zwischen dem mit der Präsentation der Werbung assoziierten Zeitpunkt und dem mit dem Zugriff des Nutzers auf die Informationsseite assoziierten Zeitpunkt in dem Sinne festlegt, dass bei Überschreitung des Schwellwerts mit höherer Wahrscheinlichkeit (oder auf jeden Fall) entschieden wird, dass kein Fall vorliegt, in dem der Nutzer die Werbung wahrgenommen hat und daraufhin auf die Informationsseite zugreift. Es kann beispielsweise entschieden werden, dass kein Fall vorliegt, in dem der Nutzer die Werbung wahrgenommen hat und daraufhin auf die Informationsseite zugreift, wenn die Entfernung den vordefinierten Schwellwert überschreitet. Informationen zu dem geographischen Bereich, in dem die Werbung präsentiert wird, kann beispielsweise von einer die Präsentation der Werbung durchführenden Entität, beispielsweise einem Fernseh- oder Hörfunksender, beispielsweise zusammen mit einem Sendeplan für die Werbung, erhalten werden.

Gemäß einer beispielhaften Ausführungsform aller Aspekte der Erfindung erfolgt der Zugriff des Nutzers auf die Informationsseite durch Anklicken eines von einer Suchmaschine auf eine Suchanfrage des Nutzers hin präsentierten, mit der Informationsseite assoziierten Suchergebnisse (beispielsweise eines organischen oder gesponserten Suchergebnisses) oder durch eine Suchanfrage des Nutzers bei einer Suchmaschine mit unmittelbarem Zugriff auf das beste, mit der Informationsseite assoziierte Suchergebnis (beispielsweise durch die "Auf Gut Glück"-Funktion bei Google). Das Suchergebnis ist beispielsweise mit einem Inhalt und/oder einer Adresse der Informationsseite assoziiert. Der Zugriff des Nutzers auf die Informationsseite durch Anklicken eines organischen Suchergebnisses kann beispielsweise aufgrund eines auf der Informationsseite hinterlegten Tracking-Pixels oder Scripts erfasst werden, das die Information über den Zugriff auf die Seite und optional weitere Informationen, wie beispielsweise den Referer (die Adresse der Seite, auf der das Suchergebnis angeklickt wurde) und/oder die für die Suchanfrage verwendeten Begriffe und/oder die Gerätegattung (ortsfest/mobil) des Geräts, mit dem der Nutzer auf die Informationsseite zugreift, an die erfassende Funktionseinheit (beispielsweise einen Tracking-Server) weiterleitet. Der Zugriff des Nutzers auf die Informationsseite durch Anklicken eines gesponserten Suchergebnisses kann beispielsweise aufgrund eines mit dem gesponserten Suchergebnis assoziierten Umleitungslinks (Redirect Link) erfasst werden, der beim Anklicken zunächst die erfassende Funktionseinheit (beispielsweise einen Tracking-Server) über das Anklicken informiert und erst dann auf die Informationsseite umleitet. Auch hier kann gfs. die Gerätegattung (ortsfest/mobil) des Geräts, mit dem der Nutzer auf die Informationsseite zugreift, übermittelt werden. In einer verbundenen beispielhaften Ausführungsform kann das Entscheiden ferner auf einer Auswertung von ein oder mehreren Suchbegriffen in der Suchanfrage basieren. Die Suchbegriffe können, wenn sie beispielsweise unüblich oder selten sind und in der Werbung verwendet werden (z.B. Produkt-Eigennamen), ein starkes Indiz dafür sein, dass der Nutzer die Werbung gesehen hat, daraufhin die Suchbegriffe in eine Suchmaschine eingegeben hat, dann eines der Suchergebnisse anklickt und damit auf die Informationsseite zugreift.

Gemäß einer beispielhaften Ausführungsform aller Aspekte der Erfindung erfolgt der Zugriff des Nutzers auf die Informationsseite durch Eingabe einer der Informationsseite zugeordneten Adresse in eine auf einem Gerät implementierte Browservorrichtung durch den Nutzer. Diese Art des Zugriffs wird als Type-In bezeichnet. Der Zugriff des Nutzers auf die Informationsseite kann hier beispielsweise aufgrund eines auf der Informationsseite hinterlegten Tracking-Pixels oder Scripts erfasst werden, das die Information über den Zugriff auf die Seite und optional weitere Infonnationen, wie beispielsweise die Gerätegattung (ortsfest/mobil) des Geräts, mit dem der Nutzer auf die Informationsseite zugreift, an die erfassende Funktionseinheit (beispielsweise einen TrackingServer) weiterleitet. In einer verbundenen beispielhaften Ausführungsform basiert das Entscheiden ferner auf einer Auswertung der durch den Nutzer eingegebenen Adresse. Wenn beispielsweise die Adresse lediglich in der Werbung genannt wird und von einem Nutzer direkt in eine Browservorrichtung oder in eine Suchmaschine eingegeben wird, um auf die der Adresse zugeordnete Informationsseite zuzugreifen, besteht eine hohe Wahrscheinlichkeit, dass der Nutzer die Werbung wahrgenommen hat und daraufhin wie beschrieben auf die Informationsseite zugreift. Nachfolgend werden einige beispielhafte Ausführungsformen aller Aspekte der Erfindung beschrieben, bei denen das Entscheiden zumindest auf der Information über die ein oder mehreren, die Präsentation der Werbung mittels des Informationskanals nicht umfassenden Berührungspunkte des Nutzers mit jeweiliger mit dem Werbetreibenden assoziierter Information oder mit einer jeweiligen Informationsseite der Menge von Informationsseiten des Werbetreibenden basiert. Die Information, die mit dem Werbetreibenden assoziiert ist, kann dabei beispielsweise eine Werbung für den Werbetreibenden oder für ein oder mehrere seiner Produkte und/oder Dienstleistungen sein. Die Information über die ein oder mehreren, die Präsentation der Werbung mittels des Informationskanals nicht umfassenden Berührungspunkte des Nutzers mit jeweiliger mit dem Werbetreibende assoziierter Information oder mit einer jeweiligen Informationsseite der Menge von Informationsseiten des Werbetreibenden, kann beispielsweise eine Information umfassen, dass kein die Präsentation der Werbung mittels des Informationskanals nicht umfassender Berührungspunkt des Nutzers mit jeweiliger mit dem Werbetreibenden assoziierter Information oder mit einer jeweiligen Informationsseite der Menge von Informationsseiten des Werbetreibenden erfasst wurde (dass also außer der Präsentation der Werbung mittels des Informationskanals kein Berührungspunkt des Nutzers mit jeweiliger mit dem Werbetreibenden assoziierter Information oder mit einer jeweiligen Informationsseite der Menge von Informationsseiten des Werbetreibenden erfasst wurde).

Gemäß einer der beispielhaften Ausführungsformen aller Aspekte der Erfindung, bei der das Entscheiden zumindest auf der Information über die Berührungspunkte basiert, wird entschieden, dass der Nutzer die Werbung wahrgenommen hat und daraufhin auf die Informationsseite zugreift, wenn die Zeitdifferenz kleiner als ein vorbestimmter Schwellwert (beispielsweise kleiner als 5, 10, 15 oder 20 min) ist und zusätzlich kein die Präsentation der Werbung mittels des Informationskanals nicht umfassender Berührungspunkt des Nutzers mit mit dem Werbetreibenden assoziierter Information oder mit einer Informationsseite der Menge von Informationsseiten des Werbetreibendenerfasst wurde.

Gemäß einer der beispielhaften Ausführungsformen aller Aspekte der Erfindung, bei der das Entscheiden zumindest auf der Information über die Berührungspunkte basiert, wird entschieden, dass der Nutzer die Werbung wahrgenommen hat und daraufhin auf die Informationsseite zugreift, wenn die Zeitdifferenz kleiner als ein vorbestimmter Schwellwert (beispielsweise kleiner als 5, 10, 15 oder 20 min) ist und zusätzlich innerhalb eines Zeitraums vorbestimmter Dauer (beispielsweise 1, 2, 4 od. 8 Wochen) vor dem Zugriff auf die Informationsseite kein die Präsentation der Werbung mittels des Informationskanals nicht umfassender Berührungspunkt des Nutzers mit mit dem Werbetreibenden assoziierter Information oder mit einer Informationsseite der Menge von Informationsseiten des Werbetreibendenerfasst wurde, oder wenn die Zeitdifferenz kleiner als ein vorbestimmter Schwellwert (beispielsweise kleiner als 5, 10, 15 oder 20 min) ist und zusätzlich innerhalb eines Zeitraums vorbestimmter Dauer (beispielsweise 1, 2, 4 od. 8 Wochen) vor einem mit der Präsentation der Werbung assoziierten Zeitpunkt kein Berührungspunkte des Nutzers mit mit dem Werbetreibenden assoziierter Information oder mit einer Informationsseite der Menge von Informationsseiten des Werbetreibenden erfasst wurde.

Gemäß einer der beispielhaften Ausführungsformen aller Aspekte der Erfindung, bei der das Entscheiden zumindest auf der Information über die Berührungspunkte basiert, werden die Berührungspunkte des Nutzers mit einem oder mehreren Profilen verglichen, die auf einer Auswertung von Berührungspunkten einer Vielzahl von Nutzern mit jeweiliger mit dem Werbetreibenden assoziierter Information oder mit einer jeweiligen Informationsseite der Menge von Informationsseiten des Werbetreibenden beruhen. Jeder der Nutzer weist also beispielsweise ein oder mehrere Berührungspunkte mit jeweiliger mit dem Werbetreibenden assoziierter Information oder mit einerjeweiligen Informationsseite der Menge von Informationsseiten des Werbetreibenden auf. Die Berührungspunkte der Nutzer werden ausgewertet, um die ein oder mehreren Profile zu erhalten. Ein erstes Profil ist dann beispielsweise für eine erste Gruppe der Nutzer charakteristisch, während ein zweites Profil für eine zweite, andere Gruppe der Nutzer charakteristisch ist. Die ein oder mehreren Profile (die sich beispielsweise auf die Menge der Informationsseiten des Werbetreibenden insgesamt beziehen) werden beispielsweise in regelmäßigen Abständen unter Berücksichtigung des jeweils vorhandenen Rohdatenmaterials von Berührungspunkten bestimmt und als Profildateien der Funktionseinheit (beispielsweise einem Tracking-Server oder einer Vielzahl von Tracking-Servern), die das Entscheiden ausführt, zur Verfügung gestellt. Bei Erfassung eines Zugriffs eines Nutzers auf eine der Informationsseiten der Menge von Informationsseiten des Werbetreibende wird dann die für den Werbetreibende spezifische Profildatei identifiziert und die darin enthaltenen Profile bei dem Entscheiden, ob der Nutzer die Werbung des Werbetreibenden in dem Informationskanal wahrgenommen hat und daraufhin auf die Informationsseite zugegriffen hat, genutzt. Beispielsweise kann für jeden unterschiedlichen Zugriffskanal, über den der Nutzer auf die Informationsseite zugreift, ein unterschiedliches Profil vorhanden sein. Beispielsweise kann der Zugriff auf die Informationsseiten des Werbetreibenden über mehrere Zugriffskanäle (beispielsweise Type-In, SEA-Klick oder SEO-Klick) möglich sein, und für zumindest einen, mehrere oder alle dieser Zugriffskanäle besteht ein jeweiliges Profil.

In einer verbundenen Ausführungsform weisen die Berührungspunkte des Nutzers und die jeweiligen Berührungspunkte der Vielzahl von Nutzern jeweils eine zeitliche Abfolge auf, und die Profile spiegeln charakteristische zeitliche Abfolgen von Berührungspunkten der Vielzahl von Nutzern oder daraus gewonnene Information wider. Die zeitliche Abfolge berücksichtigt beispielsweise die Reihenfolge, in der die Berührungspunkte aufgetreten sind, und die Art der Berührungspunkte, und optional auch die dazwischen liegenden Zeiträume. Ein Beispiel für eine zeitliche Abfolge von Berührungspunkten eines Nutzer ist beispielsweise:
(1) Display-Impression (Erfassung, dass dem Nutzer eine mit einer der Informationsseiten der Menge von Informationsseiten assoziierte Werbeanzeige auf einer Webseite angezeigt wurde)
(2) SEA (Search Engine Advertising)-Klick (Anklicken eines gesponserten Suchergebnisses, das mit einer Informationsseite der Menge von Informationsseiten verlinkt ist)
(3) SEO (Search Engine Optimisation)-Klick (Anklicken eines organischen Suchergebnisses, das mit einer Informationsseite der Menge von Informationsseiten verlinkt ist)
(4) Type-In (Direkte Eingabe der Adresse einer Informationsseite der Menge von Informationsseiten)

Wenn diese Abfolge für eine große Anzahl von Nutzern beobachtet wird, kann diese Abfolge beispielsweise als ein Profil festgelegt werden. Wenn für zumindest einen Zugriffskanal, über den der Zugriff des Nutzers auf die Informationsseite des Werbetreibenden erfolgt, ein für diesen Zugriffskanal spezifisches Profil existiert, kann dieses Profil beispielsweise eine charakteristische zeitliche Abfolge von Berührungspunkten (oder daraus gewonnene Information, wie beispielsweise die Anzahl von Berührungspunkten und/oder der Zeitraum, in dem der erste und letzte Berührungspunkt auftraten) einer Vielzahl von Nutzern darstellen, die die Werbung wahrgenommen haben und deshalb auf die Informationsseite zugreifen, wobei die Abfolge von Berührungspunkten dann insbesondere den Zugriff auf die Informationsseite als zeitlich letzten Berührungspunkt beinhaltet.

In einer verbundenen Ausführungsform sind ein oder mehrere der Profile charakteristisch für Nutzer, die eine mittels des Informationskanals präsentierte Werbung des Werbetreibenden wahrgenommen haben und daraufhin auf eine Informationsseite der Menge von Informationsseiten zugreifen. Solche Profile können beispielsweise ermittelt werden, indem Berührungspunkte einer Vielzahl von Nutzen in einem ersten Zeitraum erfasst werden, in dem die Werbung des Werbetreibenden mittels des Infomationskanals (z.B. TV) präsentiert wird. Zusätzlich können Berührungspunkte einer Vielzahl von Nutzern in einem zweiten Zeitraum erfasst werden, der dem ersten Zeitraum ähnelt (beispielsweise gleicher Wochentag, gleiches Zeitintervall, z.B. 13:00-15:00 Uhr), in dem aber die Werbung des Werbetreibenden nicht mittels des Informationskanals (z.B. TV) präsentiert wird. Aus dem Vergleich der Berührungspunkte (und deren Abfolge) in den beiden Zeiträumen lassen sich dann beispielsweise Rückschlüsse auf ein Profil ziehen, das für die Nutzer, die die Werbung wahrgenommen haben und daraufhin auf eine Informationsseite der Menge von Informationsseiten des Werbetreibenden zugreifen, charakteristisch ist.

In einer verbundenen Ausführungsform sind die Profile zumindest unter Berücksichtigung eines Vergleichs von Abfolgen von Berührungspunkten, die mit mindestens einem Zeitraum (nachfolgend: ein erster Zeitraum) assoziiert sind, in dem eine Präsentation der Werbung stattfand, und Abfolgen von Berührungspunkten, die mit mindestens einem Zeitraum (nachfolgend: ein zweiter Zeitraum) assoziiert sind, in dem keine Präsentation der Werbung stattfand, erstellt. Die Abfolgen von Berührungspunkten, die mit mindestens dem ersten Zeitraum assoziiert sind, sind beispielsweise Abfolgen von Berührungspunkten, die jeweils als letzten Berührungspunkt einen Zugriff auf die Informationsseite innerhalb dieses ersten Zeitraums aufweisen. Der erste Zeitraum kann beispielsweise ein Zeitraum während und/oder nach einer Präsentation der Werbung sein, beispielsweise ein Intervall vorgegebener Länge (z.B. 5, 10 od. 15 min), das mit der Präsentation der Werbung beginnt. Die Präsentation der Werbung ist insbesondere eine hinsichtlich der Präsentation der Werbung, für die entschieden werden soll, ob der Nutzer sie wahrgenommen hat, frühere (beispielsweise die erstmalige) Präsentation der Werbung. Die Abfolgen von Berührungspunkten, die mit mindestens dem zweiten Zeitraum assoziiert sind, sind beispielsweise Abfolgen von Berührungspunkten, die jeweils als letzten Berührungspunkt einen Zugriff auf die Informationsseite innerhalb dieses zweiten Zeitraums aufweisen. Der zweite Zeitraum kann beispielsweise ein Zeitraum außerhalb eines vorgegebenen mit der Präsentation der (oder jeder) Werbung assoziierten Zeitraums sein, beispielsweise ein Intervall vorgegebener Länge (z.B. 5, 10, 15 min oder deutlich länger, beispielsweise 1, 2 od. 5 h), das mit der Präsentation der Werbung beginnt. Der zweite Zeitraum kann insbesondere auch einen Zeitraum vor der Präsentation der Werbung, für die entschieden werden soll, ob der Nutzer sie wahrgenommen hat, liegender Zeitraum sein, beispielsweise auch ein Zeitraum vor der erstmaligen Präsentation der Werbung. Bei dem Vergleich von Abfolgen von Berührungspunkten, die mit mindestens dem ersten Zeitraum assoziiert sind, und Abfolgen von Berührungspunkten, die mit mindestens dem zweiten Zeitraum assoziiert sind, können beispielsweise jeweils diejenigen Abfolgen verglichen werden, deren letzter Berührungspunkt einen gleichen Zugriffskanal auf eine Informationsseite des Werbetreibenden aufweist (beispielsweise DisplayKlick, SEO-Klick, SEA-Klick, Type-In). Die durch den Vergleich erhaltenen Profile sind dann beispielsweise spezifisch für diesen Zugriffskanal. Der erste Zeitraum und der zweite Zeitraum können beispielsweise miteinander assoziiert sein. Beispielsweise kann der zweite Zeitraum vor dem ersten Zeitraum liegen. Somit können beispielsweise charakteristische Abweichungen in den Abfolgen von Berührungspunkten, die durch die Präsentation der Werbung bedingt sind, identifiziert werden, beispielsweise durch Identifizierung von "normalen" Abfolgen von Berührungspunkten hinsichtlich des zweiten Zeitraums und anschließende Identifizierung von Abweichungen gegenüber diesen "normalen" Abfolgen in den Abfolgen von Berührungspunkten hinsichtlich des ersten Zeitraums (der mit der Präsentation der Werbung assoziiert ist). Bei dem Vergleich können natürlich auch eine Vielzahl von ersten und zweiten Zeiträumen berücksichtigt werden, wobei beispielsweise jeweils der zweite Zeitraum vor dem ersten Zeitraum liegt. Dadurch können (mit jeder Präsentation der Werbung zunehmende) Gewöhnungseffekte an die Werbung und damit u.U. verbundene geringer ausfallende charakteristische Unterschiede zwischen den Abfolgen von Berührungspunkten hinsichtlich des ersten und zweiten Zeitraums identifiziert und bei der Entscheidung, ob ein Nutzer die Werbung wahrgenommen hat und deshalb auf die Informationsseite zugreift, berücksichtigt werden.

In einer verbundenen Ausführungsform basiert das Entscheiden zumindest auf einer festgestellten Ähnlichkeit der Abfolge der Berührungspunkte des Nutzers mit einem der ein oder mehreren Profile, die charakteristisch für Nutzer sind, die eine mittels des Informationskanals präsentierte Werbung des Werbetreibenden wahrgenommen haben und daraufhin auf eine Informationsseite der Menge von Informationsseiten zugreifen. Wenn eine solche Ähnlichkeit festgestellt wird, kann beispielsweise mit hoher Wahrscheinlichkeit davon ausgegangen werden, dass der Nutzer die Werbung wahrgenommen hat und daraufhin auf die Informationsseite zugegriffen hat, und dies kann beim Entscheiden dann gfs. zusammen mit weiteren Kriterien berücksichtigt werden.

Gemäß einer der beispielhaften Ausführungsformen aller Aspekte der Erfindung, bei der das Entscheiden zumindest auf der Information über die Berührungspunkte des Nutzers basiert, kommt zumindest einer (oder einige oder alle) der ein oder mehreren Berührungspunkte des Nutzers zumindest teilweise in einem oder zumindest teilweise durch ein öffentliches paketvermitteltes Datennetz (beispielsweise das Internet) zustande.

Gemäß einer der beispielhaften Ausführungsformen aller Aspekte der Erfindung, bei der das Entscheiden zumindest auf der Information über die Berührungspunkte des Nutzers basiert, findet zumindest einer (oder einige oder aller) der Berührungspunkte des Nutzers durch Anzeige für den Nutzer und/oder Auswählen (z.B. Anklicken) durch den Nutzer von Information (beispielsweise von mit dem Werbetreibenden assoziierter Information) in einem Online-Werbekanal (beispielsweise einem Internet-basierten Werbekanal) statt. Der Online-Werbekanal kann dabei beispielsweise einen der folgenden Werbekanäle umfassen: Suchmaschinenmarketing, Produktsuchmaschinen, Soziale Medien, Newsletter, Email oder Werbeanzeigen auf Internetseiten.

Gemäß einer der beispielhaften Ausführungsformen aller Aspekte der Erfindung, bei der das Entscheiden zumindest auf der Information über die Berührungspunkte des Nutzers basiert, erfolgt zumindest einer der Berührungspunkte des Nutzers durch Eingabe einer Adresse in eine auf einem Gerät implementierte Browservorrichtung durch den Nutzer zum Zugriff auf eine Informationsseite (beispielsweise eine Informationsseite der Menge von Informationsseiten).

Gemäß einer der beispielhaften Ausführungsformen aller Aspekte der Erfindung, bei der das Entscheiden zumindest auf der Information über die Berührungspunkte des Nutzers basiert, umfasst zumindest einer der ein oder mehreren Berührungspunkte:
- Anzeigen für den Nutzer eines von einer Suchmaschine auf eine Suchanfrage des Nutzers hin präsentierten (beispielsweise organischen oder gesponserten) Suchergebnisses, das mit einer Informationsseite der Menge von Informationsseiten , assoziiert ist,
- Zugriff auf eine Informationsseite der Menge von Informationsseiten durch Anklicken eines Links durch den Nutzer, beispielsweise in einem sozialem Netzwerk, in einer Email, in einem Newsletter, in einer auf einer Internetseite angezeigten Werbung, oder in einer organischen oder gesponserten Ergebnisliste einer Suchmaschine,
- Zugriff auf eine Informationsseite der Menge von Infonnationsseiten durch Eingabe einer Adresse in eine Browservorrichtung durch den Nutzer; oder
- Zugriff auf eine Informationsseite der Menge von Informationsseiten durch eine Suchanfrage des Nutzers bei einer Suchmaschine mit unmittelbarem Zugriff auf das beste Ergebnis.

Gemäß einer der beispielhaften Ausführungsformen aller Aspekte der Erfindung, bei der das Entscheiden zumindest auf der Information über die Berührungspunkte des Nutzers basiert, wird zumindest einer (oder einige oder alle) der ein oder mehreren Berührungspunkte des Nutzers zumindest teilweise mittels eines öffentlichen paketvermittelten Datennetzes (beispielsweise des Internets) erfasst. Die Erfassung kann beispielsweise durch die gleiche Funktionseinheit erfolgen, die auch den Zugriff auf die Informationsseite durch den Benutzer erfasst. Es kann sich dabei beispielsweise um einen Tracking-Server oder einen Tracking-Server aus einer Vielzahl von Tracking-Servern handeln, die gemeinsam für die Erfassung von Zugriffen auf die Informationsseiten aus der Menge von Informationsseiten zuständig sind.

Gemäß einer beispielhaften Ausführungsform aller Aspekte der Erfindung basiert das Entscheiden zumindest auf der Information, ob es sich bei einem Gerät, mit dem der Nutzer auf die Informationsseite zugreift, um ein mobiles Gerät handelt, und es wird entschieden, dass der Nutzer die Werbung wahrgenommen hat und daraufhin auf die Informationsseite zugreift, wenn die Zeitdifferenz kleiner als ein vorbestimmter Schwellwert (beispielsweise kleiner als 5, 10, 15 oder 20 min) ist und der Zugriff des Nutzers auf die Informationsseite mit einem mobilen Gerät erfolgt ist.

Gemäß einer beispielhaften Ausführungsform aller Aspekte der Erfindung basiert das Entscheiden zumindest auf einer Information, ob es sich bei einem Gerät, mit dem der Nutzer auf die Informationsseite zugreift, um ein mobiles Gerät handelt, und einer Information über die Art des Informationskanals. Wie bereits oben erläutert kann bei bestimmten Arten von Informationskanälen (beispielsweise bei Präsentation der Werbung in öffentlichen Plätzen) der Zugriff auf die Informationsseite mit einem mobilen Gerät ein stärkeres Indiz dafür sein, dass der Nutzer die Werbung wahrgenommen hat und daraufhin auf die Informationsseite zugreift, als in anderen Arten von Informationskanälen.

Gemäß einer beispielhaften Ausführungsform aller Aspekte der Erfindung wird zumindest das Erfassen und das Entscheiden durch einen Server, insbesondere einen Tracking-Server (beispielsweise aus einer Vielzahl von Tracking-Servern, beispielsweise eines Systems zur Überwachung und/oder Steuerung von Werbungskampagnen), ausgeführt wird.

Gemäß einer beispielhaften Ausführungsform aller Aspekte der Erfindung hängt zumindest ein Teil der dem Nutzer auf den Zugriff auf die Informationsseite hin angezeigten Informationen von einem Ergebnis des Entscheidens ab, ob der Nutzer die Werbung wahrgenommen hat und daraufhin auf die Informationsseite zugreift. In einer verbundenen beispielhaften Ausführungsform aller Aspekte der Erfindung erfolgt der Zugriff des Nutzers auf die Informationsseite über einen Umleitungslink (beispielsweise ein Redirect-Link, beispielsweise bei Zugriff auf die Informationsseite durch Anklicken eines gesponserten Suchergebnisses), und ein Server, über den die Umleitung erfolgt, wählt die Adresse der Informationsseite in Abhängigkeit des Ergebnisses des Entscheidens, ob der Nutzer die Werbung wahrgenommen hat und daraufhin auf die Informationsseite zugreift, aus oder verändert diese. In einer alternativen verbundenen beispielhaften Ausführungsform aller Aspekte der Erfindung enthält die Informationsseite Anweisungen, die die dem Nutzer angezeigten Inhalte in Abhängigkeit des Ergebnisses des Entscheidens, ob der Nutzer die Werbung wahrgenommen hat und daraufhin auf die Informationsseite zugreift, steuern oder eine Weiterleitung auf eine an das Ergebnis des Entscheidens angepasste Informationsseite (beispielsweise eine andere Informationsseite der Menge von Informationsseiten als die Informationsseite, auf die ursprünglich durch den Nutzer zugegriffen wurde) bewirken. Dies kann beispielsweise bei direktem Zugriff des Nutzers auf die Informationsseite durch Type-In oder durch Anklicken eines organischen Suchergebnisses genutzt werden.

Diese Anpassung oder Auswahl der Inhalte, die dem Nutzer angezeigt werden, wenn er auf eine Informationsseite zugreift, in Abhängigkeit des Ergebnisses des Entscheidens geschieht aus Sicht des Nutzers ohne wesentliche Verzögerung, also quasi in Echtzeit, beispielsweise innerhalb weniger ms (beispielsweise innerhalb weniger als 10, 50, 100 od. 200 ms). Dies wird dadurch ermöglicht, dass das Entscheiden direkt auf dem Tracking-Server, der auch den Zugriff auf die Informationsseite erfasst, ausgeführt wird. Der Tracking-Server kann dann beispielsweise eine Weiterleitung auf die dem Ergebnis des Entscheidens entsprechende Informationsseite bewirken oder Informationen über das Ergebnis des Entscheidens an ein in Informationsseite, auf die der Nutzer zugegriffen hat, integriertes Script übergeben, das dann die Anpassung der Inhalte oder die Weiterleitung vornimmt,

Gemäß einer beispielhaften Ausführungsform aller Aspekte der Erfindung umfasst das Verarbeiten der Information, die das Ergebnis des Entscheides repräsentiert, Ermitteln, wie viele Nutzer die Werbung wahrgenommen haben und daraufhin auf eine jeweilige Informationsseite aus der Menge der Informationsseiten (beispielsweise auf eine Internetseite einer Website) zugegriffen haben. Eine verbundene beispielhafte Ausführungsform umfasst ferner: Erhalten von Information über eine Anzahl von Nutzern, die die Werbung wahrgenommen haben (beispielsweise aus externen Quellen, beispielsweise in Form einer Reichweite bei TV- oder Radio-Spots oder einer verkauften Auflage bei Printmedien), und Ermitteln eines Verhältnisses zwischen der Anzahl von Nutzern, die die Werbung wahrgenommen haben und daraufhin auf eine jeweilige Informationsseite aus der Menge der Informationsseiten zugegriffen haben und der Anzahl von Nutzern, die die Werbung wahrgenommen haben. Das Verhältnis stellt mithin ein Maß für die Wirkung der Werbung wider und entspricht in etwa einer "CTR" für die Werbung. Dabei ist anzumerken, dass in dieses CTR lediglich Zugriffe von Nutzern einfließen, die mit sehr hoher Wahrscheinlichkeit die Werbung gesehen und daraufhin die Informationsseite aufgerufen haben. Es handelt sich also bei dieser CTR nicht lediglich um einen Schätzwert, sondern um ein tatsächliches Messergebnis.

Die in dieser Spezifikation beschriebenen beispielhaften Ausführungsformen und beispielhaften Ausgestaltungen der vorliegenden Erfindung sollen auch in allen Kombinationen miteinander offenbart sein.

Weitere vorteilhafte beispielhafte Ausgestaltungen der Erfindung sind der folgenden detaillierten Beschreibung einiger beispielhafter Ausführungsformen der vorliegenden Erfindung, insbesondere in Verbindung mit den Figuren zu entnehmen.

Die der Anmeldung beiliegenden Figuren sollen jedoch nur dem Zwecke der Verdeutlichung, nicht aber zur Bestimmung des Schutzbereiches der Erfindung dienen. Die beiliegenden Zeichnungen sind nicht maßstabsgetreu und sollen lediglich das allgemeine Konzept der vorliegenden Erfindung beispielhaft widerspiegeln. Insbesondere sollen Merkmale, die in den Figuren enthalten sind, keineswegs als notwendiger Bestandteil der vorliegenden Erfindung erachtet werden.

### Kurze Beschreibung der Zeichnungen

In den Figuren zeigen
- Fig. 1:: Eine schematische Darstellung eines Werbesystems, in dem beispielhafte Ausführungsformen der Erfindung eingesetzt werden;
- Fig. 2:: eine schematische Darstellung einer beispielhaften Ausführungsform eines Systems gemäß der Erfindung;
- Fig. 3:: eine schematische Darstellung einer beispielhaften Ausführungsform einer Vorrichtung gemäß der Erfindung;
- Fig. 4:: ein Flussdiagramm einer beispielhaften Ausführungsform eines Verfahrens gemäß der Erfindung;
- Fig. 5:: ein Flussdiagramm einer weiteren beispielhaften Ausführungsform eines Verfahrens gemäß der Erfindung;
- Fig. 6:: ein Flussdiagramm einer weiteren beispielhaften Ausführungsform eines Verfahrens gemäß der Erfindung;
- Fig. 7a:: eine schematische Darstellung einer Abfolge von Berührungspunkten eines Nutzers mit einer Website; und
- Fig. 7b:: eine schematische Darstellung einer weiteren Abfolge von Berührungspunkten eines Nutzers mit einer Website.

### Detaillierte Beschreibung einiger beispielhafter Ausführungsformen der Erfindung

Beispielhafte Ausführungsformen der Erfindung betreffen die genauere Erfassung der Wahrnehmung einer Werbung durch einen Nutzer und deren Wirkung. In der folgenden Beschreibung wird beispielhaft davon ausgegangen, dass es sich bei der Werbung um eine TV- der Radiowerbung handelt, dies soll allerdings nicht einschränkend verstanden werden, da die Erfindung in gleicher Weise auch auf andere Formen von Werbung, beispielsweise durch Printmedien verbreitete Werbung, oder Werbung in Kinos oder an öffentlichen Plätzen präsentierte Werdung angewendet werden kann.

Die nachfolgende Beschreibung ist als beispielhafte Konkretisierung der oben im Kontext der Zusammenfassung einiger beispielhafter Ausführungsformen der Erfindung beschriebenen Aspekte der Erfindung zu verstehen; die oben beschriebenen Einzelheiten gelten mithin auch für die nachfolgende Beschreibung und sollen als gemeinsam offenbart verstanden werden.

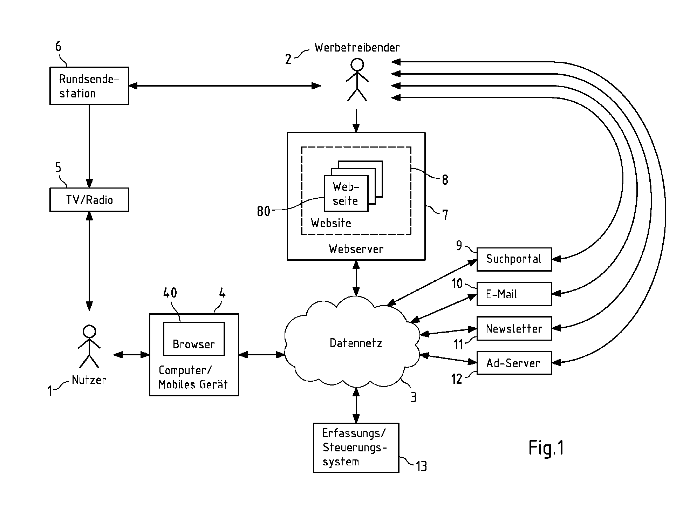

Fig. 1 ist eine schematische Darstellung eines Werbesystems, in dem beispielhafte Ausführungsformen der Erfindung eingesetzt werden. Ein Werbetreibender 2 präsentiert seine Produkte (z.B. Waren und/oder Dienstleistungen) auf einer Website 8, die eine Menge von Webseiten 80, darunter beispielsweise auch eine Startseite, umfasst. Die Webseiten 80 könne beispielsweise Hypertext Markup Language (HTML) Webseiten sein. Die Website 8 wird von einem Webserver 7 über ein Datennetz 3, das im folgenden beispielhaft als das Internet angenommen wird, Nutzern zum Abruf zur Verfügung gestellt, beispielsweise auch dem Nutzer 1, der mit einer Browservorrichtung 40 auf seinem Computer oder mobilen Gerät 4 (beispielsweise einem Smartphone, Laptop oder TabletComputer) auf die Website 8 zugreift. Der Werbetreibende 2 nutzt als Online-Werbekanäle beispielsweise ein Suchportal 9, einen E-Mail-Dienst 10, einen Newsletter-Dienst 11 und einen Ad-Server 12, um Werbung für seine Produkte über das Datennetz 3 zu verbreiten. Dies kann beispielsweise durch gesponserte Werbeanzeigen, die bei Eingabe bestimmter Suchbegriffe, auf die der Werbetreibende geboten hat, in dem Suchportal 9 erscheinen und beispielsweise mit jeweiligen Webseiten 80 der Website 8 verlinkt sind (Search Engine Advertising, SEA), oder durch E-Mails, die an den Nutzer 1 durch den E-Mail Dienst 10 verschickt werden und einen Link auf eine oder mehrere Webseiten 80 der Website 8 enthalten, oder durch einen dem Nutzer 1 zum Abonnement angebotenen Newsletter mit Links auf eine oder mehrere Webseiten 80 der Website 8 oder durch das Aussteuern von Werbeanzeigen (sog. "Display"), die auf Webseiten, auf die der Nutzer zugreift, angezeigt werden und gfs. an Eigenschaften und/oder Interessen des Nutzers 1 angepasst sind (sog. "Targeting"), durch den Ad-Server 12. Weitere, in Fig. 1 nicht dargestellte Online-Werbekanäle sind beispielsweise Produktsuchmaschinen, in denen der Werbetreibende 2 Informationen zu seinen Produkten und Links auf seine Website 8 bereitstellt, oder Preisvergleichsportale, in denen der Werbetreibende 2 Preise zu seinen Produkten und Links auf seine Website 8 bereitstellt, oder Soziale Netzwerke (z.B. Facebook, XING, LinkedIn, etc.) in denen der Werbetreibende eigene Seite für sich und/oder seine Produkte pflegt und gfs. zusätzlich Werbeanzeigen schaltet.

An das Datennetz ist ferner ein Erfassungs/Steuergngssystem 13 angeschlossen, mit denen Berührungspunkte des Nutzers 1 mit der Website 8 des Werbetreibenden in den verschiedenen OnlineWerbekanälen erfasst werden können. Bei den Berührungspunkten kann es sich beispielsweise um die bloße Wahrnehmung von Werbung in den einzelnen Online-Werbekanälen handeln, dass der Nutzers 1 also beispielsweise eine von dem Ad-Server 12 ausgesteuerte Werbeanzeige angezeigt bekommen hat ("Impression"), oder dass der Nutzer 1 auf eine Werbeanzeige in den einzelnen Online-Werbekanälen auch wirklich reagiert hat, beispielsweise in dem er die Werbeanzeige angeklickt hat und dadurch auf die Website 8 des Werbetreibenden 2 gelangt ist ("Klick"). Die Erfassung solcher Impressions und Klicks erfolgt in einer dem Fachmann bekannten Weise, beispielsweise durch in der Website 8 des Werbetreibenden oder den einzelnen Webseiten 80 integrierten Tracking-Pixeln oder Scripten, die bei Zugriff auf eine der Webseiten 80 einen Tracking-Server (der beispielsweise Teil des Erfassungs/Steuerungssystems 13 ist) über den Zugriff benachrichtigen und weitere Informationen über den Zugriff liefern, beispielsweise von welcher vorherigen Webseite der Zugriff aus erfolgte ("Referer"), mit welcher Gerätegattung der Zugriff erfolgte, welche Suchbegriffe vom Nutzer 1 verwendet wurde, etc. wie oben bereits erläutert wurde. Alternativ kann die Erfassung auch über Umleitungslinks (Redirect-Links) erfolgen, beispielsweise zur Erfassung von Klicks auf gesponserte Werbeanzeigen im Suchportal 9 ("SEA").

In Fig. 1 ist ferner eine Rundsendestation 6, hier beispielhaft in Form eines TV- oder Radiosenders implementiert, die Werbung (zusammen mit anderen Inhalten) an die TV- oder Radiogeräte einer Vielzahl von Nutzern, darunter auch das TV- oder Radiogerät 5 des Nutzers 1, ausstrahlt. Die Werbung wird der Rundsendestation 6 vom Werbetreibenden 2 zur Verfügung gestellt.

Wie zuvor erläutert existiert in dem Werbekanal TV/Radio allerdings kein Rückkanal, über den erfasst werden könnte, ob der Nutzer 1 eine Werbung tatsächlich wahrgenommen (vorliegend gesehen oder gehört) hat. Damit kann die Effizienz der TV/Radio-Werbung nicht ermittelt werden und nicht abgeschätzt werden, ob sich die Kosten für die TV/Radio-Werbung überhaupt lohnen. Es ist bisher auch nicht möglich, dem Nutzer 1, wenn er die TV/Radio-Werbung wahrgenommen hat und, um weitere Informationen zum beworbenen Produkt des Werbetreibenden zu erhalten, auf dessen Website 8 zugreift, gezielt mit einer für die TV/Radio-Werbung spezifischen Information zu versorgen, da nicht bekannt ist, ob er die TV/Radio-Werbung wahrgenommen hat und daraufhin auf eine Webseite 80 (üblicherweise die Startseite) der Website 8 zugreift.

Ausführungsformen der Erfindung lösen die Probleme und ermöglichen sowohl eine exakte Erfassung, ob der Nutzer 1 eine TV/Radio-Werbung wahrgenommen hat und daher auf eine Webseite 80 der Website 8 zugreift, als auch eine Anpassung der Inhalte, wenn der Nutzer 1 als Nutzer erkannt wird, der die TV/Radio-Werbung wahrgenommen hat und daher auf eine Webseite 80 der Website 8 zugreift.

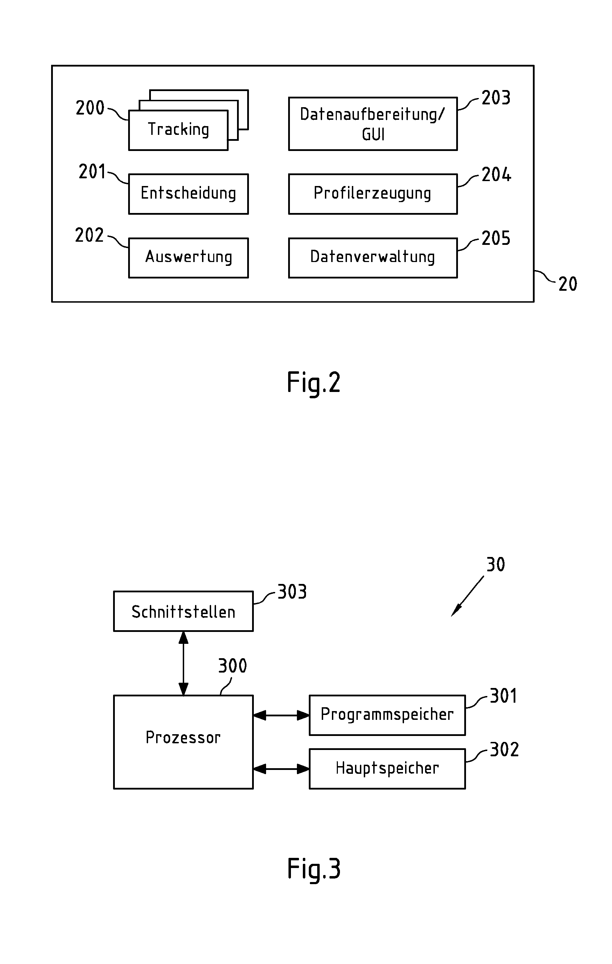

Fig. 2 ist eine schematische Darstellung einer beispielhaften Ausführungsform eines Systems 20 gemäß der Erfindung. Bei dem System 20 kann es sich beispielsweise um das Erfassungs/Steuerungssystein 13 der Fig. 1 handeln. Das System 20 kann beispielsweise durch eine einzige Vorrichtung, beispielsweise einen Server, gebildet werden. Alternativ werden die Funktionen (die beispielsweise von jeweiligen Funktionseinheiten erbracht werden) des Systems 20 durch zwei oder mehr separate Vorrichtungen (beispielsweise Server) erbracht, die beispielsweise auch räumlich voneinander entfernt (beispielsweise mehr als 100m, 1 km, 10 km od. 100km) sein können. Das System 30 ist ein Beispiel für ein System gemäß dem fünften Aspekt der Erfindung.

Das System 20 umfasst eine Tracking-Einheit 200, die aus Skalierungsgründen auch mehrfach vorhanden sein kann. Es kann sich dabei beispielsweise um einen Tracking-Server, also beispielsweise einen Webserver, handeln. Die Tracking-Einheit 200 ist zumindest für die Erfassung des Zugriffs des Nutzers 1 auf eine Webseite 80 der Website 8 des Werbetreibenden 2 zuständig. Darüber hinaus kann die Tracking-Einheit 200 auch Impressionen und Klicks des Nutzers 1 (oder eine Vielzahl von Nutzern, darunter Nutzer 1) in den Online-Werbekanälen der Fig. 1, die mit dem Werbetreibenden 2 und/oder dessen Website 8 assoziiert sind, erfassen. Die Tracking-Einheit 200 kann beispielsweise zumindest teilweise (oder gänzlich, wenn beispielsweise nur eine Tracking-Einheit 200 vorhanden ist) die Berührungspunkte des Nutzers 1 mit Information, die mit dem Werbetreibenden 2 assoziiert ist, oder mit den Webseiten 80 der Website 8 des Werbetreibenden 2 erfassen. Informationen über die Berührungspunkte des Nutzers 1 können beispielsweise in einem Cookie in dem Gerät 4 des Nutzers 1 gespeichert werden wie oben bereits beschrieben wurde.

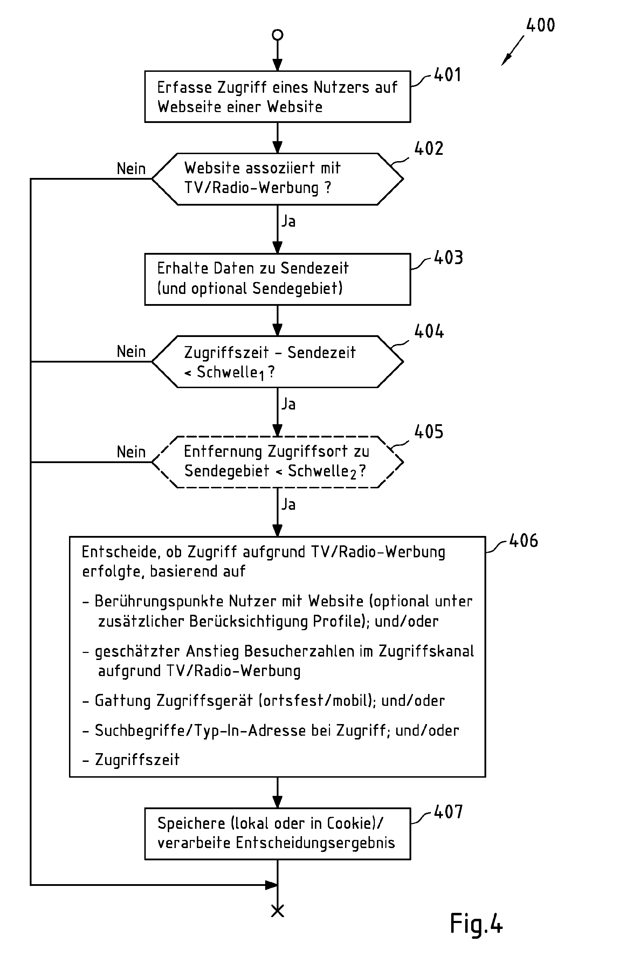

Das System 20 umfasst ferner eine Entscheidungseinheit 201, die auf den Zugriff des Nutzers 1 auf eine Webseite 80 der Website 8 hin entscheidet, ob der Nutzer 1 die über die Rundsendestation 6 ausgestrahlte TV/Radio-Werbung wahrgenommen hat und deshalb auf die Webseite 80 zugreift. Die Entscheidungseinheit 201 kann auch bestimmten, ob eine Entscheidung überhaupt getroffen werden muss, wie nachfolgend zu Fig. 4 erläutert wird.

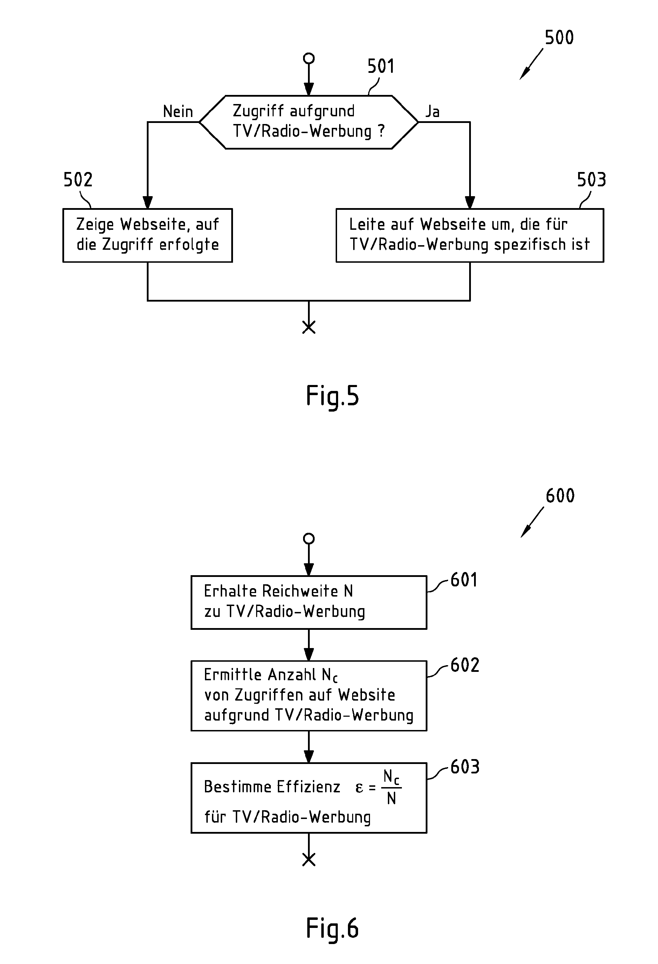

Das System 20 umfasst weiterhin eine Auswertungseinheit, die die Ergebnisse der Entscheidungseinheit 201 auswertet, um beispielsweise ein Effizienzmaß für die TV/Radio-Werbung zu bestimmen, wie nachfolgend zu Fig. 6 erläutert wird.

Eine Datenaufbereitung/Graphical User Interface (GUI) - Einheit 203 des Systems 20 stellt dem Werbetreibenden - beispielsweise über eine Webschnittstelle zum Datennetz 3 - Informationen über die für die Online-Werbekanäle und den Werbekanal TV/Radio erfassten Messwerte zum Abruf zur Verfügung.

Des Weiteren ist im System 20 eine Profilerzeugungseinheit 204 vorgesehen, die aus den erfassten Berührungspunkten (bzw. Customer-Journeys) einer Vielzahl von Nutzern beispielsweise regelmäßig charakteristische Profile erzeugt und der Entscheidungseinheit 201 als Grundlage für das Entscheiden, ob der Nutzer 1 die TV/Radio-Werbung gesehen hat und daher auf eine Webseite 80 der Website 8 zugreift, zur Verfügung stellt.

Schließlich ist im System 20 eine Datenverwaltungseinheit 205 vorhanden, die beispielsweise Daten zur TV/Radio-Werbung (z.B. Sendezeiten, Sendegebiete) und gfs. auch zu Werbungskampag-nen in den Online-Werbekanälen speichert und beispielsweise der Entscheidungseinheit 201 zur Verfügung stellt. Diese Daten wurden beispielsweise durch den Werbetreibenden 2 in das System 20 hochgeladen, beispielsweise über die Einheit 203.

Fig. 3 ist eine schematische Darstellung einer beispielhaften Ausführungsform einer Vorrichtung 30 gemäß der Erfindung. Die Vorrichtung 30 implementiert beispielsweise vollständig oder teilweise die Funktionalität des Systems 20 der Fig. 2 und/oder des Erfassungs/Steuerungssystems 13 der Fig. 1. Die Vorrichtung 30 umfasst einen Prozessor 300, der zur Ausführung von Programmen, die im Programmspeicher 301 (beispielsweise einem Read-Only Memory, ROM) gespeichert sind, eingerichtet ist. Diese Programme umfassen beispielsweise Anweisungen zur Ausführung und oder Steuerung eines Verfahrens gemäß dem ersten Aspekt der Erfindung und/oder der in den Fig. 4, 5 oder 6 beschriebenen Verfahren. Der Prozessor hat ferner Zugriff auf einen Hauptspeicher 302, der beispielsweise als Random Access Memory (RAM) Speicher ausgebildet ist und dessen sich der Prozessor 300 bei der Ausführung der Programme bedient. Der Programmspeicher 301 kann beispielsweise ein Computerprogramm gemäß dem zweiten Aspekt der Erfindung speichern, und die Vorrichtung 30 kann als Beispiel einer Vorrichtung gemäß dem dritten und vierten Aspekt der Erfindung dienen. Die Vorrichtung 30 umfasst ferner Schnittstellen 303, beispielsweise zur Anbindung der Vorrichtung 30 an ein Datennetz, beispielsweise das Datennetz 3 aus Fig. 1.

Fig. 4 ist ein Flussdiagramm 400 einer beispielhaften Ausführungsform eines Verfahrens gemäß der Erfindung, das beispielsweise in dem Erfassungs/Steuerungssystem 13 der Fig. 1 (bzw. dem System 20 der Fig. 2 oder der Vorrichtung 30 aus Fig. 3) ausgeführt wird.

In einem ersten Schritt 401 wird der Zugriff des Nutzers 1 aus Fig. 1 auf eine Webseite 80 der Website 8 des Werbetreibenden 2 erfasst (beispielsweise über ein Tracking-Pixel oder Script, beispielsweise durch die Tracking-Einheit 200 des Systems 20).

In einem Schritt 402 wird dann geprüft, ob die Website 8, auf deren Webseite 80 der Zugriff erfolgt, mit einer TV/Radio-Werbung assoziiert ist. Dies kann beispielsweise dadurch geprüft werden, ob für die Website 8 Daten zu Sendezeiten (und optional auch Sendegebieten) hinterlegt sind (beispielsweise in der Datenverwaltungseinheit 205 des Systems 20 der Fig. 2). Wenn dies nicht der Fall ist, endet das Flussdiagramm 400. Wenn die Prüfung in Schritt 402 ergibt, dass die Website mit TV/Radio-Werbung assoziiert ist, werden in Schritt 403 die Daten zur Sendezeit (und optional des Sendegebiets) der TV/Radio-Werbung erhalten. Wie oben bereits beschrieben können die Daten zur Sendezeit (und optional des Sendegebiets) beispielsweise aus einem Sendeplan extrahiert oder alternativ automatisch (beispielsweise durch optische und/oder akustische Analyse von Fenrsehund/oder Radioprogrammen nach Werbung) bestimmt werden.

In Schritt 404 wird dann geprüft, ob eine Zeitdifferenz zwischen der Sendezeit der TV/RadioWerbung und dem Zugriff auf die Webseite 80 kleiner als eine (beispielsweise durch den Werbetreibenden 2) vordefinierte Schwelle₁ (beispielsweise 5 od. 10 min) ist. Wenn dies nicht der Fall ist, wird davon ausgegangen, dass der Zugriff auf die Webseite 80 mit hoher Wahrscheinlichkeit nicht durch die TV/Radio-Werbung motiviert war, und das Flussdiagramm endet, ohne dass der Schritt 406 des Entscheides durchgeführt wird. Anderenfalls wird optional geprüft, ob die Entfernung des Zugriffsorts (also des Orts, von dem der Zugriff auf die Webseite 80 erfolgte) zu dem Sendegebiet, in dem die TV/Radio-Werbung ausgestrahlt wurde, kleiner als eine Schwelle₂ ist (die Schwelle₂ kann beispielsweise 0m sein, kann aber auch größer sein, beispielsweise in Abhängigkeit von der Schwelle₁, um eine gewisse Bewegung des Nutzers zwischen dem Zeitpunkt der Wahrnehmung der TV/Radio-Werbung und dem Zugriff auf die Webseite 80 zu erlauben). Wenn dies nicht der Fall ist, wird davon ausgegangen, dass der Zugriff auf die Webseite 80 mit hoher Wahrscheinlichkeit nicht durch die TV/Radio-Werbung motiviert war, weil der Nutzer zu weit entfernt von dem Sendegebiet der TV/Radio-Werbung ist, und das Flussdiagramm endet, ohne dass der Schritt 406 des Entscheidens durchgeführt wird. Anderenfalls wird Schritt 406 ausgeführt.

In Schritt 406 wird entschieden, ob der im Schritt 401 erfasste Zugriff des Nutzers 1 auf die Webseite 80 der Website 8 aufgrund der TV/Radio-Werbung erfolgte, also ob der Nutzer 1 auf die Webseite 80 zugreift, weil er die TV/Radio-Werbung wahrgenommen hat und sich jetzt für das in der TV/Radio-Werbung angepriesene Produkt interessiert. Diese Entscheidung basiert, wie bereits oben ausführlich erläutert, auf einem oder mehreren der folgenden Kriterien:
- Berührungspunkte des Nutzers 1 mit der Website 8 (beispielsweise die Customer-Journey des Nutzers 1 hinsichtlich der Website 8), optional zusätzlich unter Berücksichtigung von ein oder mehreren Profilen, die auf einer Auswertung der Berührungspunkte/Customer-Joumeys einer Vielzahl von Nutzern beruhen (wie sie beispielsweise von der Profilerzeugungseinheit 204 des Systems 20 der Fig. 2 erzeugt werden);
- Ein mit der Präsentation der TV/Radio-Werbung verbundener geschätzter Anstieg ("Up-lift") der Anzahl von Zugriffe auf die Website 8 in dem Zugriffskanal, über den der Zugriff des Nutzers 1 auf die Website 8 erfolgt, in einem Zeitintervall während und/oder nach der Präsentation der Werbung gegenüber einem Zeitintervall vor der Präsentation der Werbung;
- Gattung des Geräts, mit dem der Nutzer in Schritt 401 auf die Webseite 80 zugreift (ortsfest/mobil);
- Suchbegriffe (durch den Nutzer 1 in eine Suchmaschine eingegeben) oder Type-InAdressen (durch den Nutzer 1 in die Browservorrichtung 40 eingegeben), die zum Zugriff auf die Webseite 80 in Schritt 401 geführt haben;
- Informationen über die Zugriffszeit (die Zugriffszeit bzw. die Zeitdifferenz zwischen der Präsentation der TV/Radio-Werbung und dem Zugriff auf die Webseite 80 kann also sowohl in Schritt 404 als "hartes" Kriterium dafür verwendet werden, ob das Entscheiden in Schritt 406 überhaupt ausgeführt werden soll, sowie als "weiches" Kriterium beim Entscheiden in Schritt 406 selbst, wobei beispielsweise eine kleine Zeitdifferenz für eine höhere Wahrscheinlichkeit sprechen kann, dass der Nutzer 1 die TV/Radio-Werbung wahrgenommen hat und deshalb auf die Webseite 80 zugreift).

Wenn mehrere Kriterien in der Entscheidung berücksichtigt werden, kann beispielsweise jedes berücksichtigte Kriterium einen positiven oder negativen Beitrag oder "Score" zum Endergebnis beitragen. Die Geweichte (Bedeutung) der einzelnen Kriterien können dabei jeweils gleich oder unterschiedlich stark sein.

Die Schritte 402-406 können beispielsweise von der Entscheidungseinheit 201 des Systems 20 der Fig. 2 ausgeführt werden.

Im Schritt 407 wird dann das Entscheidungsergebnis gespeichert, beispielsweise in einem lokalen Speicher (beispielsweise in der Datenverwaltungseinrichtung 205 des Systems 20 der Fig. 2) oder in einem Cookie auf dem Gerät 4 des Nutzers 1. Zusätzlich oder alternativ kann eine Verarbeitung des Entscheidungsergebnisses erfolgen, wie nachfolgend zu den Fig. 5 und 6 erläutert wird. Dies kann beispielsweise durch die Tracking-Einlxeit 200, die Entscheidungseinheit 201 und/oder die Auswertungseinheit 202 des Systems 20 der Fig. 2 erfolgen.

Im Folgenden werden weitere Details der Entscheidungsfindung in Schritt 406 der Fig. 4 beschrieben.

Die Entscheidung kann wie beschrieben u.a. auf dem geschätzten Anstieg der Anzahl von Zugriffen auf die Website 8 in dem Zugriffskanal (z.B. Type-In, SEO-Klick, SEA-Klick) auf die Website 8 in einem Zeitintervall (beispielsweise 5, 10 oder 15 min) während und/oder nach der Präsentation der Werbung gegenüber einem Zeitintervall (beispielsweise 5, 10 oder 15 min) vor der Präsentation der Werbung basieren. Die Schätzung des Anstiegs kann insbesondere auf historischen Daten beruhen, die anlässlich einer oder mehrerer früherer Präsentationen der Werbung (u.U. auch einer anderen, aber ähnlichen Werbung, beispielsweise betreffend ein Produkt des gleichen Herstellers) erfasst wurden, beispielsweise am jeweils gleichen Wochentag (oder an einem Wochentag, der beispielsweise ebenfalls ein Arbeitstag oder beispielsweise ebenfalls ein Wochenend- oder Feiertag ist) und zur jeweils gleichen Uhrzeit (oder einer ähnlichen Uhrzeit, z.B. ± 1h od. 2h).

Dazu folgendes Beispiel zur Berechnung des Anstiegs: Eine TV/Radio-Werbung wird das erste Mal an einem Freitag, den 02.11.2012 um 15:58 präsentiert. Die historischen Daten spiegeln wider, wie viele Nutzer im Durchschnitt an Freitagen in einem Zeitintervall während und nach der Präsentation, hier beispielsweise ein Zeitraum von 10 min, also von 15:58-16:08 Uhr, über unterschiedliche Zugriffskanäle (z.B. SEA Brand, SEO Brand und Type-in) auf die Website 8 gekommen sind. So ergibt sich ein historischer Wert für die durchschnittliche Besucheranzahl pro Zugriffskanal für diesen Tag und diese Uhrzeit. Darüber hinaus wird auch ein Zeitraum unmittelbar vor der Präsentation der TV/Radio-Werbung analysiert (beispielsweise ein Zeitraum von 10 Minuten vor der TV/Radio-Werbung) - im vorliegenden Beispiel also am 02.11.2012 von 15:47 - 15:57 Uhr. Aus der durchschnittlichen Besucherzahl pro Zugriffskanal, in diesem Zeitraum vor der Präsentation der TV/Radio-Werbung und der durchschnittlichen Besucherzahl in dem Zeitraum während und nach der Präsentation der TV/Radio-Werbung kann dann der Anstieg der Besucherzahl pro Zugriffskanal, berechnet und für die Schätzung des Anstiegs der Besucherzahl pro Zugriffskanal hinsichtlich der Website 8 für zukünftige Präsentationen der TV/Radio-Werbung verwendet werden.

Dadurch lässt sich also ein Anstieg an Nutzern ermitteln, welche aufgrund der TV/Radio-Werbung auf die Website 8 kommen. Dieser Anstieg wird beispielsweise bei jeder erneuten Präsentation der TV/Radio-Werbung neu berechnet, da voraussichtlich mit zunehmender Bekanntheit der Website 8 - durch die TV/Radio-Werbung - prozentual weniger Nutzers im Verhältnis zu vorher auf die Website 8 kommen. Dies bedeutet, dass der Anstieg über die Zeit hinweg abnimmt, da das mit der TV/Radio-Werbung beworbene Produkt od. der Hersteller bekannter sind und das Grundrauschen somit zunimmt. Die für zurückliegende Präsentationen der TV/Radio-Werbung, beispielsweise an gleichen Wochentagen und gleichen Zeiten, erfassten Anstiege der Besucherzahlen pro Zugriffskanal können dann zur Schätzung des Anstiegs der Besucherzahlen pro Zugriffskanal für eine zukünftige Präsentation der TV/Radio-Werbung verwendet werden (beispielsweise durch Extrapolation) und dann im Schritt 406 zur Entscheidungsfindung im Rahmen einer solchen "zukünftigen" Präsentation der TV/Radio-Werbung genutzt werden. Die Schätzung kann beispielsweise durch das System 20 (siehe Fig. 2) vorgenommen werden (beispielsweise basierend auf von der Tracking-Einheit 200 erfassten Daten), beispielsweise durch die Entscheidungseinheit 201 oder die Auswertungseinheit 202.

Beispielsweise kann, wenn der geschätzte Anstieg/Uplift der Besucherzahlen der Website 8 pro Zugriffskanal das einzige Entscheidungskriterium in Schritt 406 darstellt, entschieden werden, dass der Nutzer 1 die TV/Radio-Werbung wahrgenommen hat, weil er über den Zugriffskanal Type-In auf die Webseite 80 der Website 8 zugegriffen hat und weil aufgrund des geschätzten Anstiegs/Uplifts der Besucherzahlen für den Zugriffskanal Type-In, beispielsweise 60%, eine hohe Wahrscheinlichkeit besteht, dass er die TV/Radio-Werbung wahrgenommen hat. Wenn der Nutzer hingegen über den Zugriffskanal SEO-Klick auf die Webseite 80 zugreift, und der geschätzte Anstieg/Uplift der Besucherzahlen für den Zugriffskanal SEO-Klick lediglich 20% beträgt, kann beispielsweise im Schritt 406 entschieden werden, dass die Wahrscheinlichkeit zu niedrig ist, den Nutzer 1 als Nutzer zu klassifizieren, der die TV/Radio-Werbung gesehen hat.

Wenn im Schritt 406 weitere Entscheidungskriterien berücksichtigt werden, kann wie erwähnt jedes der Kriterien (beispielsweise also der geschätzte Anstieg der Besucherzahlen pro Zugriffskanal und die Gattung des Geräts, mit dem der Zugriff erfolgt) positiv oder negativ zu einem Score beitragen, anhand dessen letztlich entschieden wird, ob der Nutzer 1 die TV/Radio-Werbung wahrgenommen hat oder nicht.

Die Entscheidung in Schritt 406 kann wie beschrieben u.a. auch auf der Customer-Journey des Nutzers 1 hinsichtlich der Website 8 unter Berücksichtigung von ein oder mehreren Profilen, die auf einer Auswertung der Customer-Journeys einer Vielzahl von Nutzen beruhen, basieren.

Die Profile können beispielsweise Customer-Journeys von Nutzern charakterisieren, die in der Vergangenheit die TV/Radio-Werbung gesehen haben und daraufhin auf die Website 8 des Werbetreibenden zugegriffen haben. Diese Profile können beispielsweise spezifisch für jeden Zugriffskanal auf die Website 8 bestimmt werden. Zunächst werden dazu "normale" Customer-Journeys identifiziert, indem für eine Vielzahl von Nutzern, die in einem Zeitraum, zu dem die Werbung nicht präsentiert wurde, auf die Website 8 über einen bestimmten Zugriffskanal (z.B. Type-In) zugegriffen haben (beispielsweise kann so identifiziert werden, dass in der Vergangenheit in dem untersuchten Zeitraum durchschnittlich 60% aller Nutzer, die über den Zugriffskanal SEO-Klick auf die Website 8 gekommen sind, zwei weitere vorherige Klicks in der Customer-Journey aufwiesen).

Dann werden für die Vergangenheit Abweichungen von dieser "normalen" Customer-Journey identifiziert, indem ein Zeitraum analysiert wird, in dem die Werbung präsentiert wurde, beispielsweise ein Zeitraum, der mit der Präsentation der Werbung beginnt und die folgenden 15 min. mit einschließt. Dieser Zeitraum schließt sich vorzugsweise unmittelbar an den Zeitraum an, der zur Identifizierung der "normalen" Customer-Journey wie im vorigen Absatz beschrieben herangezogen wurde. Dadurch können Saisonalitäten od. zyklische Effekte weitgehend ausgeschlossen werden. Wenn bei einer größeren Menge von Nutzen im Zeitraum der Präsentation der Werbung ähnliche Abweichungen von der "normalen" Customer-Journey auftreten, können die diesbezüglichen Customer-Journeys dieser Nutzer als Grundlage für ein Profil für Nutzer, die die TV/RadioWerbung gesehen haben und daraufhin auf die Website 8 zugreifen, dienen (das Profil kann beispielsweise die Customer-Journey selbst darstellen, wenn diese für alle Nutzer gleich ist, oder kann durch zumindest teilweise Abstraktion daraus hervorgehen).

Als konkretes Beispiel kann beispielsweise festgestellt werden, dass hinsichtlich eines Zeitraums der Präsentation der TV/Radio-Werbung in der Vergangenheit überproportional oft die Customer-Journey SEA-Klick => Type-In auftrat (der Berührungspunkt SEA-Klick kann dabei auch außerhalb des Zeitraums der Präsentation der Werbung liegen). Diese Customer-Journey war zur Zeit der Präsentation der Werbung für 40% an allen Type-In-Klicks verantwortlich. Vor der Präsentation der Werbung war diese Customer-Journey nur zu 5% an den Type-In-Klicks verantwortlich. Daraus ergibt sich ein Muster/Profil, das eindeutig auf einen Nutzer hinweist, der die TV/Radio-Werbung wahrgenommen hat.

Wie erwähnt kann die Entscheidung in Schritt 406 auch auf einer Kombination mehrerer Kriterien beruhen, beispielsweise auf einer Kombination aus dem geschätzten Anstieg/Uplift der Anzahl von Zugriffen auf die Website 8 in dem Zugriffskanal und der Customer-Journey des Nutzers 1 hinsichtlich der Website 8 unter Berücksichtigung eines oder mehreren zuvor identifizierter Profile.

Dazu folgendes Beispiel:
Aus der historischen Analyse ist bekannt, dass der geschätzte Anstieg/Uplift während der TV/Radio-Werbung für den Zugriffskanal "SEA-Brand" 50% beträgt. Somit kann also grundsätzlich davon ausgegangen werden, dass jeder zweite Nutzer, dessen Zugrifferfasst wird, ein Nutzer ist, der die TV/Radio-Werbung wahrgenommen hat.

Angenommen, es gab exakt zwei Zugriffe auf die Website 8 des Werbetreibenden während des Zeitraums der (aktuellen) Präsentation der TV/Radio-Werbung:
Nutzer A:
   Customer Journey: SEO-generisch → SEA-generisch → Type-In → SEA-Brand
      (Erster Klick vor vier Tagen)
Nutzer B:
   Customer Journey: SEA-generisch → SEA-Brand
      (Erster Klick vor zwei Wochen)

Das bezeichnen die Begriffe "SEO-generisch" und "SEA-generisch" SEO- bzw. SEA-Klicks, die aufgrund von Suchanfragen mit generischen, also nicht markenbezogenen Suchbegriffen erfolgen, während die Begriffe "SEO-Brand" und "SEA-Brand" SEO- bzw. SEA-Klicks bezeichnen, die aufgrund von Suchanfrage mit markenbezogenen Suchbegriffen (beispielsweise betreffend die in einer Werbung beworbene Marke eines Produkts oder Herstellers) erfolgen.

Das Muster/Profil "SEA generisch → SEA Brand" (mit "langer" Kette - Vergleich erster Klick, letzer Klick) taucht während der Präsentation der TV/Radio-Werbung zu 30% auf, allerdings nur zu 5%, wenn keine TV/Radio-Werbung läuft, so dass folgende Schlussfolgerung gezogen werden kann:
Nutzer A ist aufgrund des geschätzten Uplifts zu 50% ein Nutzer, der die TV/Radio-Werbung wahrgenommen hat, hat aber eine Customer-Journey, welche so generisch/allgemein ist, dass er wohl einen "Normalfall" darstellt. Somit ist die Wahrscheinlichkeit bei weniger als 15%, dass der Nutzer A ein Nutzer ist, der die TV/Radio-Werbuag wahrgenommen hat.
Nutzer B ist aufgrund des geschätzten Uplifts zu 50% ein Nutzer, der die TV/Radio-Werbung wahrgenommen hat, und hat auch eine Customer-Journey, welche überproportional während der Präsentation der TV/Radio-Werbung auftritt. Somit ist die Wahrscheinlichkeit bei mehr als 85%, dass der Nutzer B ein Nutzer ist, der die TV/Radio-Werbung wahrgenommen hat.

Fig. 5 ist ein Flussdiagramm 500 einer beispielhaften Ausführungsform eines Verfahrens gemäß der Erfindung, das beispielsweise in dem Erfassungs/Steuerungssystem 13 der Fig. 1 (bzw. dem System 20 der Fig. 2, insbesondere dessen Entscheidungseinheit 201 und/oder dessen Tracking-Einheit 200, oder der Vorrichtung 30 aus Fig. 3) ausgeführt wird. Die Schritte 501-503 des Flussdiagramms können als beispielhafte Implementierung des Schritts 407 der Fig. 4 verstanden werden.

In einem ersten Schritt 501 wird, basierend auf dem Ergebnis des Entscheidens gemäß Schritt 406 der Fig. 4, ermittelt, ob der Zugriff des Nutzers 1 auf die Webseite 80 der Website 8 aufgrund der TV/Radio-Werbung erfolgte. Wenn dies der Fall ist, wird in Schritt 503 der Nutzer 1 auf eine Webseite der Website 8 umgeleitet, die für die TV/Radio-Werbung spezifisch ist, also beispielsweise im Gegensatz zu einer Startseite der Website 8 eine konkretere Beschreibung des Produkts enthält, das in der TV/Radio-Werbung beworben wurde. Dies wird beispielsweise durch ein Redirect-Verfahen (beispielsweise beim Zugriff des Nutzers 1 auf die Webseite 80 durch Anklicken eines gesponserten Suchergebnisses (SEA-Klick) oder ein in der Webseite 80, auf die der Zugriff erfolgte, eingebettetes Script ermöglicht (beispielsweise beim Zugriff des Nutzers 1 auf die Webseite 80 durch Anklicken eines organischen Suchergebnisses (SEO-Klick) oder bei direkter Adresseingabe (Type-In)). Anderenfalls wird dem Nutzer in Schritt 502 die Webseite 80 der Website 80 angezeigt, die er (in Schritt 401 der Fig. 4) auch aufgerufen hat.

Fig. 6 ist ein Flussdiagramm 600 einer beispielhaften Ausführungsform eines Verfahrens gemäß der Erfindung, das beispielsweise in dem Erfassungs/Steuerungssystem 13 der Fig. 1 (bzw. dem System 20 der Fig. 2, insbesondere dessen Auswertungseinheit 202, oder der Vorrichtung 30 aus Fig. 3) ausgeführt wird. Die Schritte 601-603 des Flussdiagramms können als beispielhafte Implementierung des Schritts 407 der Fig. 4 verstanden werden.

In einem ersten Schritt 601 wird zu der TV/Radio-Werbung eine Reichweite N erhalten. Die Reichweite N beschreibt, wie viele Zuschauer/Zuhörer nach Auffassung der Rundsendestation 6 (siehe Fig. 1) die TV/Radio-Werbung wahrgenommen haben. Sie beruht beispielsweise auf repräsentativen Befragungen von Zuschauern/Zuhörern. Die Information zur Reichweite N wird beispielsweise der Erfassungs/Steuerungseinheit 13 der Fig. 1 zur Verfügung gestellt und beispielswei- se in der Datenverwaltungseinheit 205 des Systems 20 der Fig. 2 gespeichert.

In einem Schritt 602 wird die Anzahl N_{c} von Zugriffen auf die Website 8 des Werbetreibenden 2, die aufgrund der TV/Radio-Werbung erfolgt sind, ermittelt. Wie dies für den Nutzer 1 geschieht, wurde anhand des Flussdiagramms 400 der Fig. 4 bereits beschrieben. Die Anzahl N_{c} von Zugriffen wird erhalten, in dem, ausgehend von einer initialen Anzahl N_{c}=0 für eine Vielzahl erfasster Zugriffe von Nutzern auf eine (beliebige) Webseite 80 der Website 8 des Werbetreibenden 2 entschieden wird (wie im Flussdiagramm 400 der Fig. 4 beschrieben), ob der jeweilige Zugriff aufgrund der TV/Radio-Werbung erfolgt. Wenn dies der Fall ist, wird die Anzahl N_{c} um eins erhöht. Die Bestimmung der Anzahl N_{c} ist beispielsweise abgeschlossen, wenn seit der Präsentation der TV/Radio-Werbung eine Zeitdauer verstrichen ist, die der Schwelle1 entspricht, also beispielsweise 5 od. 10 min nach der Präsentation der TV/Radio-Werbung.

Im Schritt 603 wird schließlich die Effizienz ε=N_{c}/N aus der Reichweite N und der Anzahl N_{c} berechnet und der TV/Radio-Werbung zugeordnet.

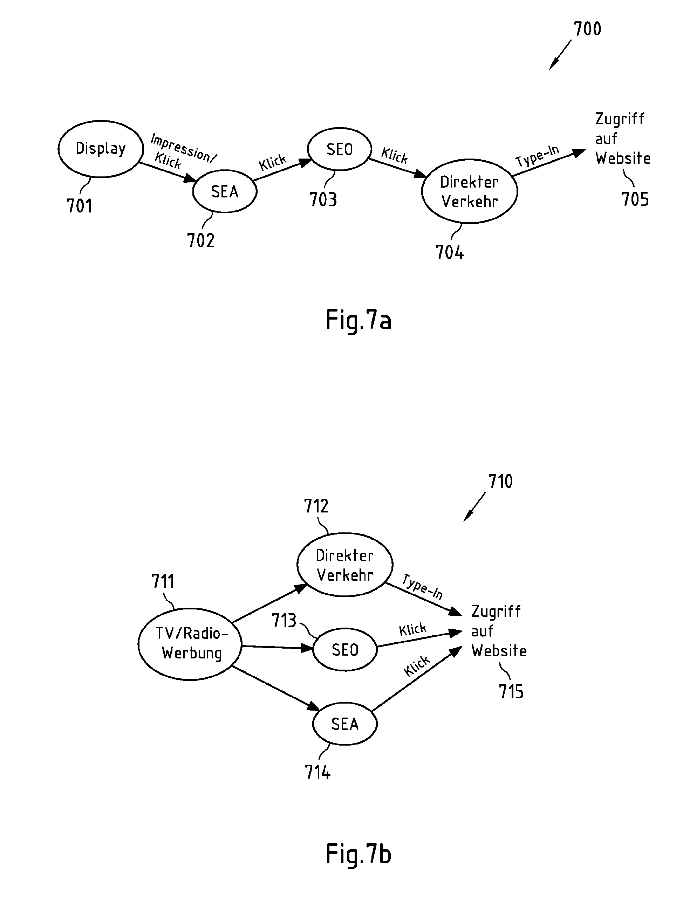

Fig. 7a zeigt eine schematische Darstellung einer Abfolge oder Customer-Journey 700 von Berührungspunkten eines Nutzers mit einer Website. Man sieht, dass vor dem Zugriff 705 eines Nutzers (beispielsweise des Nutzers 1) auf eine Website (beispielsweise auf Website 8), der beispielsweise im Schritt 401 des Flussdiagramms 400 der Fig. 4 erfasst wird und das Abarbeiten des Flussdiagramms 400 auslöst, weitere Berührungspunkte des Nutzers mit der Website aufgetreten sein können, beispielsweise die Anzeige einer mit der Website oder dem Werbetreibenden assoziierten Anzeige (Display 701), die der Nutzer ansieht oder anklickt, danach das Anklicken eines gesponserten Suchergebnisses (SEA 702) durch den Nutzer, danach das Anklicken eines organischen Suchergebnisses (SEO 703) durch den Nutzer, und schließlich ein Zugriff auf die Website durch direkte Eingabe (Type-In) der Adresse (URL) einer Webseite der Website (Direkter Verkehr 704).

Fig. 7b zeigt eine schematische Darstellung einer weiteren Abfolge oder Customer-Journey 710 von Berührungspunkten eines Nutzers mit einer Webseite. Fig. 7b zeigt insbesondere, welche Aktionen des Nutzers durch eine TV/Radio-Werbung 711 ausgelöst werden können und dann zum Zugriff auf eine mit der TV/Radio-Werbung assoziierten Website führen, nämlich beispielsweise direkter Verkehr 712 (also Type-In der Adresse einer Webseite der mit der TV/Radio-Werbung assoziierten Website), Anklicken eines organischen Suchergebnisses (SEO-Klick 713) und Anklicken eines gesponserten Suchergebnisses (SEA-Klick 714).

Im Folgenden werden noch einige Charakteristika beispielhafter Ausführungsformen der Erfindung beschrieben.

### a) Berücksichtigung der Customer Journey im Entscheidungsprozess

Es ist denkbar, einige oder sämtliche Klick- und Impression-Informationen (Customer-Journey) erst zu einem Zeitpunkt zu betrachten, wenn die gesammelten Rohdaten in einem zentralen Rechenzentrum verarbeitet werden. Dies kann allerdings bei großen Datenmengen von Kunden/Werbetreibenden für die Berechnung und Analyse der gemessenen TV-Trackingzahlen die Berechnungszeit deutlich beeinträchtigen. Im schlimmsten Fall kann dies dazu führen, dass die Berechnungszeit das zur Berechnung zur Verfügung stehende Berechnungsintervall überschreitet und somit keine Daten ausgewertet werden können.

In beispielhaften Ausführungsformen der Erfindung wird daher die Erkennung von Nutzern als Nutzer, die eine TV/Radio-Werbung gesehen haben, und die Segmentierung direkt auf den Tracking-Servern ausgeführt. Auf diesen Weg wird jeder Nutzer einzeln und in Echtzeit analysiert und dann gfs. als TV/Radio-Nutzer (also als Nutzer, der die TV/Radio-Werbung wahrgenommen hat und daher auf eine Website zugreift) gekennzeichnet. Hierfür werden aus einem Vergleichszeitraum Daten gesammelt und analysiert. Mit Hilfe dieser Daten können nun relevante Informationen über Nutzergruppen gebildet werden anhand ihrer Customer-Journey. Diese gesammelten und aggregierten Daten werden nun beispielsweise täglich berechnet und anschließend automatisch auf den oder alle Tracking-Server publiziert.

Wenn nun ein User während oder kurz nach einer Präsentation einer TV/Radio-Werbung einen Klick-In auf die Website des Kunden hat, kann dieser anhand seines Klickpfades einer der vorgefertigten Gruppen zugeordnet werden und somit in Echtzeit entschieden werden, ob es sich um einen TV/Radio-Nutzer handelt, oder nicht.

Die Informationen zur Customer-Journey des Nutzers werden aus einem Cookie ausgelesen, und somit kann der Pfad und die Zugehörigkeit des Nutzers ermittelt werden

### b) Berücksichtigung der Endgeräte-Gattung im Entscheidungsprozess

Endgeräte können eindeutig über den Browser des Nutzers identifiziert und ausgelesen werden. Hier liegt die Annahme zugrunde, dass während einer TV/Radio-Werbung vermehrt mit mobilen Endgeräten auf die Zielseite/Website zugegriffen wird, da die Nutzer die Werbung im TV/Radio sehen und dann direkt mit ihrem Smartphone bzw. Tablet reagieren, um sich das Angebot auf der Website genauer anzuschauen. Diese Annahme wurde durch Analysen bestätigt und kann somit in die Erkennung mit aufgenommen werden.

### c) Landingpage Optimierung

Wenn gemäß den Punkten a) und b) ein Nutzer eindeutig als TV/Radio-Nutzer erkannt wurde, sollte diesem auch eine gezielte Landingpage angezeigt werden, welche das beworbene Produkt aus der TV/Radio-Werbung genauer beschreibt und alle Informationen zu diesem bereitstellt.

Die normale Startseite der Website, auf die ein Nutzer sonst kommen würde, hat in aller Regel sehr breite Informationen und dreht sich nicht ausschließlich um das beworbene Produkt. Der Klick-In auf die Website kann auf zwei Wegen erfolgen: 1) Klick über Google AdWords (Redirect über Tracking-Server) oder direkter Zugriff auf die Seite via SEO oder Type-In. In beiden Fällen kann die Zielseite manipuliert bzw. auf eine andere Seite weitergeleitet werden. Im Falle des Redirects ist dies über einen 302 Header Redirect gelöst. Im Falle eines direkten Zugriffs können die Meta Informationen der Zielseite beeinflusst werden, da ein Javascript eingebunden ist, und somit auf eine Landingpage, welche weiterführende Informationen zu dem Thema / Produkt bereitstellt, geleitet werden.

### d) Zusätzliche Key Performance Indicators (KPIs)

TV/Radio-Sender stellen, nach der Ausspielung der Werbespots, einen erweiterten Sendebericht zur Verfügung. Dieser beinhaltet die tatsächlich ausgespielten Spots und die Reichweite. Bei der Reichweite handelt es sich um die Zahl der TV/Radio-Zuschauerzahlen, welche den jeweiligen Spot wahrgenommen haben. Diese Zahl wird vom Sender erhoben.

Im Internet ist die Click-Through-Rate (CTR) eine maßgebliche Kennzahl, um die Qualität des Verkehrs und den Erfolg einer Werbekampagne zu klassifizieren. Mittels Reichweite kann genau diese Kennzahl ermittelt werden und so das Verhältnis von Zuschauern zu Werbekontakten (Klicks) ermittelt werden.

Die in dieser Spezifikation beschriebenen beispielhaften Ausführungsformen der vorliegenden Erfindung sollen auch in allen Kombinationen miteinander offenbart sein. Insbesondere soll auch die Beschreibung eines von einer Ausführungsform umfassten Merkmals - sofern nicht explizit gegenteilig erklärt - vorliegend nicht so verstanden werden, dass das Merkmal für die Funktion des Ausführungsbeispiels unerlässlich oder wesentlich ist. Die Abfolge der in dieser Spezifikation geschilderten Verfahrenschritte in den einzelnen Ablaufdiagrammen ist nicht zwingend, alternative Abfolgen der Verfahrensschritte sind denkbar. Die Verfahrensschritte können auf verschiedene Art und Weise implementiert werden, so ist eine Implementierung in Software (durch Programmanweisungen), Hardware oder eine Kombination von beidem zur Implementierung der Verfahrensschritte denkbar. In den Patentansprüchen verwendete Begriffe wie "umfassen", "aufweisen", "beinhalten",

"enthalten" und dergleichen schließen weitere Elemente oder Schritte nicht aus. Unter die Formulierung "zumindest teilweise" fallen sowohl der Fall "teilweise" als auch der Fall "vollständig". Eine Mehrzahl von Einheiten, Personen oder dergleichen bedeutet im Zusammenhang dieser Spezifikation mehrere Einheiten, Personen oder dergleichen. Die Verwendung des unbestimmten Artikels schließt eine Mehrzahl nicht aus. Eine einzelne Einrichtung kann die Funktionen mehrerer in den

Patentansprüchen genannten Einheiten bzw. Einrichtungen ausführen. In den Patentansprüchen angegebene Bezugszeichen sind nicht als Beschränkungen der eingesetzten Mittel und Schritte anzusehen.

Offenbart werden ferner folgende beispielhafte Ausführungsformen der vorliegenden Erfindung:
Ausführungsform 1:
   Verfahren, ausgeführt durch eine oder mehrere Vorrichtungen, umfassend:
      - Erfassen eines Zugriffs eines Nutzers aufeine Informationsseite aus einer Menge von ein oder mehreren Informationsseiten eines Werbetreibenden;
      - Entscheiden, ob der Nutzer eine ihm mittels eines Informationskanals präsentierte Werbung des Werbetreibenden wahrgenommen hat und daraufhin auf die Informationsseite zugreift, wobei das Entscheiden zumindest von einer Zeitdifferenz zwischen einem mit der Präsentation der Werbung assoziierten Zeitpunkt und einem mit dem Zugriff des Nutzers auf die Informationsseite assoziierten Zeitpunkt abhängt und/oder zumindest auf der Zeitdifferenz basiert und
      - zumindest eines von Verarbeiten, Speichern und Veranlassen der Speicherung von Information, die das Ergebnis des Entscheidens repräsentiert,
         wobei das Entscheiden zumindest auf einem der folgenden basiert:
         - Information über einen oder mehrere, die Präsentation der Werbung mittels des Informationskanals nicht umfassende Berührungspunkte des Nutzers mit jeweiliger mit dem Werbetreibenden assoziierter Information oder mit einer jeweiligen Informationsseite der Menge von Informationsseiten des Werbetreibenden,
         - ein mit der Präsentation der Werbung verbundener geschätzter Anstieg der Anzahl von Zugriffen auf die Informationsseiten des Werbetreibenden in dem Zugriffskanal, über den der Zugriff des Nutzers auf die Informationsseite erfolgt, in einem Zeitintervall während und/oder nach der Präsentation der Werbung im Vergleich zu einem Zeitintervall vor der Präsentation der Werbung;
            und
         - Information, ob es sich bei einem Gerät, mit dem der Nutzer auf die Informationsseite zugreift, um ein mobiles Gerät handelt.
Ausführungsform 2:
   Verfahren nach Ausführungsform 1, wobei das Entscheiden ferner von einer Entfernung zwischen einer Position des Nutzers zu einem mit dem Zugriff auf die Informationsseite assoziierten Zeitpunkt und einem geographischen Bereich, in dem die Werbung präsentiert wurde, abhängt oder darauf basiert.
Ausführungsform 3:
   Verfahren nach einer der vorhergehenden Ausführungsformen, wobei der Zugriff des Nutzers auf die Informationsseite durch Anklicken eines von einer Suchmaschine auf eine Suchanfrage des Nutzers hin präsentierten, mit der Informationsseite assoziierten Suchergebnisses oder durch eine Suchanfrage des Nutzers bei einer Suchmaschine mit unmittelbarem Zugriff auf das beste, mit der Informationsseite assoziierte Suchergebnis erfolgt.
Ausführungsform 4:
   Verfahren nach Ausführungsform 3, wobei das das Entscheiden ferner auf einer Auswertung von ein oder mehreren Suchbegriffen in der Suchanfrage basiert.
Ausführungsform 5:
   Verfahren nach einer der Ausführungsformen 1-2, wobei der Zugriff des Nutzers auf die Informationsseite durch Eingabe einer der Informationsseite zugeordneten Adresse in eine auf einem Gerät implementierte Browservorrichtung durch den Nutzer erfolgt.
Ausführungsform 6:
   Verfahren nach Ausführungsform 5, wobei das Entscheiden ferner auf einer Auswertung der durch den Nutzer eingegebenen Adresse basiert.
Ausführungsform 7:
   Verfahren nach einer der vorhergehenden Ausführungsformen, wobei der Informationskanal eines von Printmedien, Fernsehen, Rundfunk, Kino oder Präsentation, insbesondere an öffentlich zugänglichen Plätzen, durch Anzeigetafeln und/oder Lautsprecher umfasst.
Ausführungsform 8:
   Verfahren nach einer der vorhergehenden Ausführungsformen, wobei das Entscheiden zumindest auf der Information über die Berührungspunkte des Nutzers basiert.
Ausführungsform 9:
   Verfahren nach Ausführungsform 8, wobei entschieden wird, dass der Nutzer die Werbung wahrgenommen hat und daraufhin auf die Informationsseite zugreift, wenn die Zeitdifferenz kleiner als ein vorbestimmter Schwellwert ist und zusätzlich kein die Präsentation der Werbung mittels des Informationskanals nicht umfassender Berührungspunkt des Nutzers mit mit dem Werbetreibenden assoziierter Information oder mit einer Informationsseite der Menge von Informationsseiten des Werbetreibenden erfasst wurde.
Ausführungsform 10:
   Verfahren nach Ausführungsform 8, wobei entschieden wird, dass der Nutzer die Werbung wahrgenommen hat und daraufhin auf die Informationsseite zugreift, wenn die Zeitdifferenz kleiner als ein vorbestimmter Schwellwert ist und zusätzlich innerhalb eines Zeitraums vorbestimmter Dauer vor dem Zugriff auf die Informationsseite kein die Präsentation der Werbung mittels des Informationskanals nicht umfassender Berührungspunkt des Nutzers mit mit dem Werbetreibenden assoziierter Information oder mit einer Informationsseite der Menge von Informationsseiten des Werbetreibenden erfasst wurde, oder wenn die Zeitdifferenz kleiner als ein vorbestimmter Schwellwert ist und
   zusätzlich innerhalb eines Zeitraums vorbestimmter Dauer vor einem mit der Präsentation der Werbung assoziierten Zeitpunkt kein Berührungspunkt des Nutzers mit mit dem Werbetreibenden assoziierter Information oder mit einer Informationsseite der Menge von Informationsseiten des Werbetreibenden erfasst wurde.
Ausführungsform 11:
   Verfahren nach Ausführungsform 8, wobei die Berührungspunkte des Nutzers mit einem oder mehreren Profilen verglichen werden, die auf einer Auswertung von Berührungspunkten einer Vielzahl von Nutzern mit jeweiliger mit dem Werbetreibenden assoziierter Information oder mit einer jeweiligen Informationsseite der Menge von Informationsseiten des Werbetreibenden beruhen.
Ausführungsform 12:
   Verfahren nach Ausführungsform 11, wobei die Berührungspunkte des Nutzers und die jeweiligen Berührungspunkte der Vielzahl von Nutzern jeweils eine zeitliche Abfolge aufweisen, und wobei die Profile charakteristische zeitliche Abfolgen von Berührungspunkten der Vielzahl von Nutzern oder daraus gewonnene Information widerspiegeln.
Ausführungsform 13:
   Verfahren nach einer der Ausführungsformen 11-12, wobei ein oder mehrere der Profile charakteristisch für Nutzer sind, die eine mittels des Informationskanals präsentierte Werbung des Werbetreibenden wahrgenommen haben und daraufhin auf eine Informationsseite der Menge von Informationsseiten zugreifen.
Ausführungsform 14. Verfahren nach einer der Ausführungsformen 12-13, wobei die Profile zumindest unter Berücksichtigung eines Vergleichs von Abfolgen von Berührungspunkten, die mit mindestens einem Zeitraum assoziiert sind, in dem eine Präsentation der Werbung stattfand, und Abfolgen von Berührungspunkten, die mit mindestens einem Zeitraum assoziiert sind, in dem keine Präsentation der Werbung stattfand, erstellt sind.
Ausführungsform 15:
   Verfahren nach einer der Ausführungsformen 13-14, wobei das Entscheiden zumindest auf einer festgestellten Ähnlichkeit der Abfolge der Berührungspunkte des Nutzers mit einem der ein oder mehreren Profile, die charakteristisch für Nutzer sind, die eine mittels des Informationskanals präsentierte Werbung des Werbetreibenden wahrgenommen haben und daraufhin auf eine Informationsseite der Menge von Informationsseiten zugreifen, basiert.
Ausführungsform 16:
   Verfahren nach einer der Ausführungsformen 8-15, wobei zumindest einer der Berührungspunkte des Nutzers zumindest teilweise in einem oder zumindest teilweise durch ein öffentliches paketvermitteltes Datennetzes, insbesondere das Internet, zustande kommt.
Ausführungsform 17:
   Verfahren nach einer der Ausführungsformen 8-16, wobei zumindest einer der Berührungspunkte des Nutzers durch Anzeige für den Nutzer und/oder Auswählen durch den Nutzer von Information in einem Online-Werbekanal stattfindet.
Ausführungsform 18:
   Verfahren nach Ausführungsform 17, wobei der Online-Werbekanal einen der folgenden Werbekanäle umfasst: Suchmaschinenmarketing, Produktsuchmaschinen, Soziale Medien, Newsletter, Email oder Werbeanzeigen auf Internetseiten.
Ausführungsform 19:
   Verfahren nach einer der Ausführungsformen 8-18, wobei zumindest einer der Berührungspunkte des Nutzers durch Eingabe einer Adresse in eine auf einem Gerät implementierte Browservorrichtung durch den Nutzer zum Zugriff auf eine Informationsseite erfolgt.
Ausführungsform 20:
   Verfahren nach einer der Ausführungsformen 8-19, wobei zumindest einer der Berührungspunkte des Nutzers zumindest teilweise mittels eines öffentlichen paketvermittelten Datennetzes, insbesondere mittels des Internets, erfasst wird.
Ausführungsform 21:
   Verfahren nach einer der Ausführungsformen 1-7, wobei das Entscheiden zumindest auf der Information, ob es sich bei einem Gerät, mit dem der Nutzer auf die Informationsseite zugreift, um ein mobiles Gerät handelt, basiert, und wobei entschieden wird, dass der Nutzer die Werbung wahrgenommen hat und daraufhin auf die Informationsseite zugreift, wenn die Zeitdifferenz kleiner als ein vorbestimmter Schwellwert ist und der Zugriff des Nutzers auf die Informationsseite mit einem mobilen Gerät erfolgt ist.
Ausführungsform 22:
   Verfahren nach einer der Ausführungsformen 1-20, wobei das Entscheiden zumindest auf der Information, ob es sich bei einem Gerät, mit dem der Nutzer auf die Informationsseite zugreift, um ein mobiles Gerät handelt, und einer Information über die Art des Informationskanals basiert.
Ausführungsform 23:
   Verfahren nach einer der vorhergehenden Ausführungsformen, wobei zumindest das Erfassen und das Entscheiden durch einen Server, insbesondere einen Tracking-Server, ausgeführt werden.
Ausführungsform 24:
   Verfahren nach einer der vorhergehenden Ausführungsformen, wobei zumindest ein Teil der dem Nutzer auf den Zugriff auf die Informationsseite hin angezeigten Informationen von einem Ergebnis des Entscheidens abhängen, ob der Nutzer die Werbung wahrgenommen hat und daraufhin auf die Informationsseite zugreift.
Ausführungsform 25:
   Verfahren nach Ausführungsform 24, wobei der Zugriff des Nutzers auf die Informationsseite über einen Umleitungslink erfolgt, und wobei ein Server, über den die Umleitung erfolgt, die Adresse der Informationsseite in Abhängigkeit des Ergebnisses des Entscheidens, ob der Nutzer die Werbung wahrgenommen hat und daraufhin auf die Informationsseite zugreift, auswählt oder verändert.
Ausführungsform 26:
   Verfahren nach Ausführungsform 25, wobei die Informationsseite Anweisungen enthält, die die dem Nutzer angezeigten Inhalte in Abhängigkeit des Ergebnisses des Entscheidens, ob der Nutzer die Werbung wahrgenommen hat und daraufhin auf die Informationsseite zugreift, steuern oder eine Weiterleitung auf eine an das Ergebnis des Entscheidens angepasste Informationsseite bewirken.
Ausführungsform 27:
   Verfahren nach einer der vorhergehenden Ausführungsformen, wobei das Verarbeiten der Information, die das Ergebnis des Entscheides repräsentiert, umfasst:
      - Ermitteln, wie viele Nutzer die Werbung wahrgenommen haben und daraufhin auf eine jeweilige Informationsseite aus der Menge der Informationsseiten zugegriffen haben.
Ausführungsform 28:
   Verfahren nach Ausführungsform 27, ferner umfassend:
      - Erhalten von Information über eine Anzahl von Nutzern, die die Werbung wahrgenommen haben, und
      - Ermitteln eines Verhältnisses zwischen der Anzahl von Nutzern, die die Werbung wahrgenommen haben und daraufhin auf eine jeweilige Informationsseite aus der Menge der Informationsseiten zugegriffen haben, und der Anzahl von Nutzern, die die Werbung wahrgenommen haben.
Ausführungsform 29:
   Computerprogramm, umfassend Programmanweisungen, die einen Prozessor zur Ausführung und/oder Steuerung des Verfahrens gemäß einer der Ausführungsformen 1 bis 28 veranlassen, wenn das Computerprogramm auf dem Prozessor läuft.
Ausführungsform 30:
   Vorrichtung, eingerichtet zur Ausführung des Verfahrens nach einer der Ausführungsformen 1-28 oder umfassend jeweilige Mittel zur Ausführung der Schritte des Verfahrens nach einer der Ausführungsformen 1-28.
Ausführungsform 31:
   System, umfassend eine oder mehrere Vorrichtungen, wobei das System zur Ausführung des Verfahrens nach einer der Ausführungsformen 1-28 eingerichtet ist oder jeweilige Mittel zur Ausführung der Schritte des Verfahrens nach einer der Ausführungsformen 1-28 umfasst.

## Patentansprüche

1. Verfahren, ausgeführt durch eine oder mehrere Vorrichtungen, umfassend:
- Erfassen eines Zugriffs eines Nutzers auf eine Informationsseite aus einer Menge von ein oder mehreren Informationsseiten eines Werbetreibenden;
- Entscheiden, ob der Nutzer eine ihm mittels eines Informationskanals präsentierte Werbung des Werbetreibenden wahrgenommen hat und daraufhin auf die Informationsseite zugreift, wobei das Entscheiden zumindest von einer Zeitdifferenz zwischen einem mit der Präsentation der Werbung assoziierten Zeitpunkt und einem mit dem Zugriff des Nutzers auf die Informationsseite assoziierten Zeitpunkt abhängt und/oder zumindest auf der Zeitdifferenz basiert und
- zumindest eines von Verarbeiten, Speichern und Veranlassen der Speicherung von Information, die das Ergebnis des Entscheidens repräsentiert,
wobei das Entscheiden zumindest auf einem der folgenden basiert:
- Information über einen oder mehrere, die Präsentation der Werbung mittels des Informationskanals nicht umfassende Berührungspunkte des Nutzers mit jeweiliger mit dem Werbetreibenden assoziierter Information oder mit einer jeweiligen Informationsseite der Menge von Informationsseiten des Werbetreibenden,
- ein mit der Präsentation der Werbung verbundener geschätzter Anstieg der Anzahl von Zugriffen auf die Informationsseiten des Werbetreibenden in dem Zugriffskanal, über den der Zugriff des Nutzers auf die Informationsseite erfolgt, in einem Zeitintervall während und/oder nach der Präsentation der Werbung im Vergleich zu einem Zeitintervall vor der Präsentation der Werbung;
und
- Information, ob es sich bei einem Gerät, mit dem der Nutzer auf die Informationsseite zugreift, um ein mobiles Gerät handelt.

2. Verfahren nach Anspruch 1, wobei das Entscheiden ferner von einer Entfernung zwischen einer Position des Nutzers zu einem mit dem Zugriff auf die Informationsseite assoziierten Zeitpunkt und einem geographischen Bereich, in dem die Werbung präsentiert wurde, abhängt oder darauf basiert.

3. Verfahren nach einem der vorhergehenden Ansprüche,
- wobei der Zugriff des Nutzers auf die Informationsseite durch Anklicken eines von einer Suchmaschine auf eine Suchanfrage des Nutzers hin präsentierten, mit der Informationsseite assoziierten Suchergebnisses oder durch eine Suchanfrage des Nutzers bei einer Suchmaschine mit unmittelbarem Zugriff auf das beste, mit der Informationsseite assoziierte Suchergebnis erfolgt und das das Entscheiden ferner auf einer Auswertung von ein oder mehreren Suchbegriffen in der Suchanfrage basiert, oder
- wobei der Zugriff des Nutzers auf die Informationsseite durch Eingabe einer der Informationsseite zugeordneten Adresse in eine auf einem Gerät implementierte Browservorrichtung durch den Nutzer erfolgt und das Entscheiden ferner auf einer Auswertung der durch den Nutzer eingegebenen Adresse basiert.

4. Verfahren nach einem der vorhergehenden Ansprüche, wobei das Entscheiden zumindest auf der Information über die Berührungspunkte des Nutzers basiert, und wobei entschieden wird, dass der Nutzer die Werbung wahrgenommen hat und daraufhin auf die Informationsseite zugreift,
- wenn die Zeitdifferenz kleiner als ein vorbestimmter Schwellwert ist und zusätzlich kein die Präsentation der Werbung mittels des Informationskanals nicht umfassender Berührungspunkt des Nutzers mit mit dem Werbetreibenden assoziierter Information oder mit einer Informationsseite der Menge von Informationsseiten des Werbetreibenden erfasst wurde, oder
- wenn die Zeitdifferenz kleiner als ein vorbestimmter Schwellwert ist und zusätzlich innerhalb eines Zeitraums vorbestimmter Dauer vor dem Zugriff auf die Informationsseite kein die Präsentation der Werbung mittels des Informationskanals nicht umfassender Berührungspunkt des Nutzers mit mit dem Werbetreibenden assoziierter Information oder mit einer Informationsseite der Menge von Informationsseiten des Werbetreibenden erfasst wurde, oder wenn die Zeitdifferenz kleiner als ein vorbestimmter Schwellwert ist und zusätzlich innerhalb eines Zeitraums vorbestimmter Dauer vor einem mit der Präsentation der Werbung assoziierten Zeitpunkt kein Berührungspunkt des Nutzers mit mit dem Werbetreibenden assoziierter Information oder mit einer Informationsseite der Menge von Informationsseiten des Werbetreibenden erfasst wurde.

5. Verfahren nach einem der Ansprüche 1-3, wobei das Entscheiden zumindest auf der Information über die Berührungspunkte des Nutzers basiert, und wobei die Berührungspunkte des Nutzers mit einem oder mehreren Profilen verglichen werden, die auf einer Auswertung von Berührungspunkten einer Vielzahl von Nutzern mit jeweiliger mit dem Werbetreibenden assoziierter Information oder mit einer jeweiligen Informationsseite der Menge von Informationsseiten des Werbetreibenden beruhen.

6. Verfahren nach Anspruch 5, wobei die Berührungspunkte des Nutzers und die jeweiligen Berührungspunkte der Vielzahl von Nutzern jeweils eine zeitliche Abfolge aufweisen, und wobei die Profile charakteristische zeitliche Abfolgen von Berührungspunkten der Vielzahl von Nutzern oder daraus gewonnene Information widerspiegeln.

7. Verfahren nach einem der Ansprüche 5-6, wobei ein oder mehrere der Profile charakteristisch für Nutzer sind, die eine mittels des Informationskanals präsentierte Werbung des Werbetreibenden wahrgenommen haben und daraufhin auf eine Informationsseite der Menge von Informationsseiten zugreifen.

8. Verfahren nach einem der Ansprüche 6-7, wobei die Profile zumindest unter Berücksichtigung eines Vergleichs von Abfolgen von Berührungspunkten, die mit mindestens einem Zeitraum assoziiert sind, in dem eine Präsentation der Werbung stattfand, und Abfolgen von Berührungspunkten, die mit mindestens einem Zeitraum assoziiert sind, in dem keine Präsentation der Werbung stattfand, erstellt sind.

9. Verfahren nach einem der Ansprüche 7-8, wobei das Entscheiden zumindest auf einer festgestellten Ähnlichkeit der Abfolge der Berührungspunkte des Nutzers mit einem der ein oder mehreren Profile, die charakteristisch für Nutzer sind, die eine mittels des Informationskanals präsentierte Werbung des Werbetreibenden wahrgenommen haben und daraufhin auf eine Informationsseite der Menge von Informationsseiten zugreifen, basiert.

10. Verfahren nach einem der Ansprüche 1-3, wobei das Entscheiden zumindest auf der Information, ob es sich bei einem Gerät, mit dem der Nutzer auf die Informationsseite zugreift, um ein mobiles Gerät handelt, basiert, und wobei entschieden wird, dass der Nutzer die Werbung wahrgenommen hat und daraufhin auf die Informationsseite zugreift, wenn die Zeitdifferenz kleiner als ein vorbestimmter Schwellwert ist und der Zugriff des Nutzers auf die Informationsseite mit einem mobilen Gerät erfolgt ist, oder wobei das Entscheiden zumindest auf der Information, ob es sich bei einem Gerät, mit dem der Nutzer auf die Informationsseite zugreift, um ein mobiles Gerät handelt, und einer Information über die Art des Informationskanals basiert.

11. Verfahren nach einem der vorhergehenden Ansprüche, wobei zumindest ein Teil der dem Nutzer auf den Zugriff auf die Informationsseite hin angezeigten Informationen von einem Ergebnis des Entscheidens abhängen, ob der Nutzer die Werbung wahrgenommen hat und daraufhin auf die Informationsseite zugreift.

12. Verfahren nach Anspruch 11, wobei der Zugriff des Nutzers auf die Informationsseite über einen Umleitungslink erfolgt, und wobei ein Server, über den die Umleitung erfolgt, die Adresse der Informationsseite in Abhängigkeit des Ergebnisses des Entscheidens, ob der Nutzer die Werbung wahrgenommen hat und daraufhin auf die Informationsseite zugreift, auswählt oder verändert.

13. Verfahren nach Anspruch 12, wobei die Informationsseite Anweisungen enthält, die die dem Nutzer angezeigten Inhalte in Abhängigkeit des Ergebnisses des Entscheidens, ob der Nutzer die Werbung wahrgenommen hat und daraufhin auf die Informationsseite zugreift, steuern oder eine Weiterleitung auf eine an das Ergebnis des Entscheidens angepasste Informationsseite bewirken.

14. Computerprogramm, umfassend Programmanweisungen, die einen Prozessor zur Ausführung und/oder Steuerung des Verfahrens gemäß einem der Ansprüche 1 bis 13 veranlassen, wenn das Computerprogramm auf dem Prozessor läuft.

15. System, umfassend eine oder mehrere Vorrichtungen, wobei das System zur Ausführung des Verfahrens nach einem der Ansprüche 1-13 eingerichtet ist oder jeweilige Mittel zur Ausführung der Schritte des Verfahrens nach einem der Ansprüche 1-13 umfasst.
